# EUROPEAN PATENT SPECIFICATION

(11) **EP 2 960 809 B1**
(45) Date of publication and mention of the grant of the patent: **09.08.2017**
(21) Application number: 14174779.0
(22) Date of filing: 27.06.2014
(51) Int. Cl.: G06F 17/30

(54) **Transparent access to multi-temperature data**
Transparenter Zugang zu Daten mit mehreren Temperaturen
Accès transparent à des données multi-températures

(43) Date of publication of application: 30.12.2015
(73) Proprietor: SAP SE, 69190 Walldorf (DE)
(72) Inventor: Bolik, Veit, 69190 Walldorf (DE)
(74) Representative: Richardt Patentanwälte PartG mbB

(56) References cited:
- EP-A1- 2 660 732
- US-A- 5 515 531
- US-A- 5 960 194

## Description

### Technical field

This disclosure relates generally to data processing and, in particular, to transparent access of data.

### Background

Data accessed/processed by various applications and/or services can be stored based on the age, importance, and/or any other factors related to the data in databases. For example, data that is important and/or frequently used, e.g., operation-relevant (or "hot") data can be stored in fast, expensive storage media that can be quickly accessed, whereas data that is less relevant or less-frequently accessed (or "cold" data) can be stored in a slow, less expensive storage media. The Hot data can occupy top levels of storage hierarchy so that it can be easily accessed. Data "temperature" ("hot" or "cold") can be assigned to the data based on usage, access, storage media, and/or any other factors.

The data can be stored redundantly at different levels of a storage hierarchy. However, it is preferable that only the hot data occupy top level(s) of storage hierarchy to save costs. After data temperature has been assigned to particular business object data and appropriate data storage location has been determined, the data can be appropriately queried/accessed. However, given the multiple temperatures of the stored data, it is difficult to determine how to optimally access the data at different storage levels, so that data queries load and/or process correct portions of "hot" and/or "cold" data.

Some conventional approaches to resolving this problem involve the user specifying whether cold data is to be considered or not. This is not feasible as the user typically is not aware of the temperature that has been assigned to the data and hence, is not able to identify whether cold data needs to be queried. This can lead to the end user not receiving the data the user requested (e.g., the user can be forced to re-run the query with a lower temperature delimiter), performance penalties due to unnecessarily evaluating data of higher I/O latency, and processing of a higher data volume. Another conventional approach requests application logic to derive the determination of whether hot/cold data needs to be queried and change all access coding, so that hot and/or cold data is queried explicitly. Such approach is implementation- and cost-prohibitive.

Thus, the conventional approaches failed to provide transparent data access that can avoid (content-wise) unnecessary data load and processing costs without placing a decision burden on end users or application developers in deciding whether data of lower temperatures should be accessed.

The US 5 960 194 A discloses a multi-tiered indexing method for a partitioned table in a parallel or distributed database system. A Local Index is created and maintained for each partition of the table and a Coarse Global Index is created and maintained. The Coarse Global Index identifies the indexed partition(s) by partition identifiers (PIDs) and associates the individual Index Key Values with their target partitions so that an access request with a highly partition-selective search predicate on the Index Key can be quickly and easily directed to the target partition(s) for processing.

### Summary

A computer-implemented technology for providing access to a database is described herein. As it will be clearly seen from the description herein this technology can reduce access time to the database by directing queries to a correct partition of the database. This process is implemented by generating a row store index of the database, wherein each data row of the database has a respective index row. As a result thereof access time to the database is reduced. Access time to the database is further reduced by storing the partitions on different storage devices having different access time. The partition containing "hot" data is stored on the first storage device having shorter access time than the second storage device, on which the rest of partitions are stored. At least a portion of the index rows is stored on the first data storage and the rest is stored on the second storage. Storing of the database across partitions and row store index across the first and the second data storage provides a unique opportunity for effective aging of data at two different time scales. For instance, moving data between partitions, when its "temperature" is changed, can be made in predetermined intervals of time because of big data volumes of data to be moved. Such operations may be performed on a weekly, monthly, annual, etc. time scale. On the other hand the most frequently used portion of index rows may be stored on the first storage and updated instantly. Since a data volume of the row sore index is much smaller than a data volume of the database, it may be stored in non-compressed way, while data compression is usually used for storing partitions of the database because of their big data volume.

Utilization of this scheme mentioned above can contribute to solving the following contradiction. Storing the database across partitions may be implemented according to a first set of criteria enabling optimum operation of a first group of programs, while optimum operation of a second group of programs requires storing the database across partitions according to a second set of criteria being in contradiction with the first set of the criteria. For instance programs like on-line On-Line Analytical Processing (OLAP) may prepare reports on an annual basis. Therefore it makes sense to split a data base comprising transactions in partitions on the annual basis as well. On the other hand programs like On-Line Transactional Processing (OLTP) may continue updating/monitoring at least a portion of the transactions for duration of more than one year on a daily basis. In order to avoid searching for transactions to be processed by OLTP in all partitions, a row store index can be used effectively. An OLTP application can identify first in the row store index one or more partitions where the requested by OLTP transactions are stored and afterwards search for the requested transactions.

The advantage of the proposed scheme may be illustrated on another simple example. For instance optimum performance of a first group of programs operating on the database comprising transactions requires splitting of database in partitions on an annual basis, i.e. each of the transactions is stored in a respective partition associated with a year when the each of the transactions is closed. The second group of programs prepares analysis and/or modifies all transactions generated for one or more clients. This activity of the one or more clients may extend over several years, therefore having the row store index helps to start a search in the partitions comprising needed transactions instead of searching through entire database.

It is an objective of embodiments of the invention to provide for a system configured to provide access to a database, a computer-implemented method for providing access to a database on the system, and a computer readable medium having stored thereon a computer executable program code for providing access to a database on the system. Advantageous embodiments are described in the dependent claims. According to one embodiment, the present invention relates to a system comprising a first storage device, a second storage device, and a computing device. A database, containing entries, is stored across partitions. The first storage device comprises one partition of the partitions. The second storage device comprises the other partition(s) except the one of the first storage device. Each of the partitions has a respective partition identification for identification of that partition. Each of the entries comprises at least one data value indicative of allocation of the each of the entries in one of the partitions. Each of the entries is stored in one or more data rows of data tables stored in the database. Each of the data rows comprises a respective primary key for identification of that data row.

The computing device comprises: a memory storing processor-executable program code and a computer processor to execute the processor-executable program code in order to cause the computing device to: generate, for each of the primary keys, a respective index row comprising the respective primary key and the partition identification associated with said respective primary key; and execute a query by primary key on the database, wherein one of the primary keys is specified in the query by primary key.

The executing of the query by primary key comprises the following: identifying the partition identification associated with the specified primary key using the index rows; and executing a query by primary key on the partition having the identified partition identification using the specified primary key.

According to one embodiment, the execution of the processor-executable code by the computer processor further causes the computing device to modify the one or more indicative data values of the entry; and move the entry to the target partition if at least one data value indicative of allocation of the entry to be moved is modified and the at the least one modified data value indicates that the entry has to be moved to the target partition form the source partition in which it is currently stored, wherein all index rows comprising the respective primary keys of the data rows of the entry to be moved are updated after the entry to be moved is moved, wherein in each of the updated index rows the partition identification of the source partition is substituted by the partition identification of the target partition, wherein the source partition is one of the partitions and the target partition is another one of the target partitions.

According to one embodiment, the execution of the processor-executable code by the computer processor further causes the computing device to store at least a portion of the index rows on the first storage device, and storing all index rows, which are not stored on the first storage device, on the second storage device, wherein the index rows stored on the first storage device comply with an index allocation criterion, wherein the identifying of the partition identification associated with the specified primary key is performed using the index rows stored on the first storage device if the index rows stored on the first storage device comprise the specified primary key otherwise the identifying of the partition identification associated with the specified primary key is performed using the index rows stored on the second storage device. According to one embodiment, the present invention relates to a computer-implemented method for providing access to a database on a system. The database, comprising entries, is stored across partitions. The system comprises a first storage device, a second storage device, and a computing device. The first storage device comprises one partition of the partitions. The second storage device comprises the other partition(s) except the one of the first storage device. Each of the partitions has a respective partition identification of that partition. Each of the entries comprises at least one data value indicative of allocation of the each of the entries in one of the partitions. Each of the entries is stored in one or more data rows of data tables stored in the database. Each of the data rows comprises a respective primary key for identification of that data row. The computing device comprises a memory storing processor-executable program code and a computer processor to execute the processor-executable program code in order to cause the computing device to perform the computer-implemented method.

The computer-implemented method comprises the following: generating, for each of the primary keys, a respective index row comprising the respective primary key and the partition identification associated with said respective primary key; and executing a query by primary key on the database, wherein one of the primary keys is specified in the query by primary key.

The executing of the query by primary key comprises the following: identifying the partition identification associated with the specified primary key using the index rows; and executing a query by primary key on the partition having the identified partition identification using the specified primary key.

According to one embodiment, the present invention relates to a computer readable medium having stored thereon a processor-executable program code for execution by a computer processor controlling a computing device of a system. The system comprises a first storage device, a second storage device, and the computing device. The database, comprising entries, is stored across partitions. The first storage device comprises one partition of the partitions. The second storage device comprises the other partition(s) except the one of the first storage device. Each of the partitions has a respective partition identification for identification of that partition. Each of the entries comprises at least one data value indicative of allocation of the each of the entries in one of the partitions. Each of the entries is stored in one or more data rows of data tables stored in the database. Each of the data rows comprises a respective primary key for identification of that data row. The computing device comprises a memory storing processor-executable program code and a computer processor to execute the processor-executable program code in order to cause the computing device to perform the computer-implemented method.

The computer-implemented method comprises the following: generating, for each of the primary keys, a respective index rows comprising the respective primary key and the partition identification associated with said respective primary key; and executing a query by primary key on the database, wherein one of the primary keys is specified in the query by primary key.

The executing of the query by primary key comprises the following: identifying the partition identification associated with the specified primary key; and executing a query by primary key on the partition having the identified partition identification using the specified primary key.

In another embodiment the computer-implemented method further comprises storing at least a portion of the index rows on the first storage device, and storing all index rows, which are not stored on the first storage device, on the second storage device, wherein the index rows stored on the first storage device comply with an index allocation criterion, wherein the identifying of the partition identification associated with the specified primary key is performed using the index rows stored on the first storage device if the index rows stored on the first storage device comprise the specified primary key otherwise the identifying of the partition identification associated with the specified primary key is performed using the index rows stored on the second storage device.

In another embodiment the computer-implemented method further comprises: modifying the one or more indicative data values of the entry; and moving the entry to the target partition if at least one data value indicative of allocation of the entry to be moved is modified and the at the least one modified data value indicates that the entry has to be moved to the target partition form the source partition in which it is currently stored, wherein all index rows comprising the respective primary keys of the data rows of the entry to be moved are updated after the entry to be moved is moved, wherein in each of the updated index rows the partition identification of the source partition is substituted by the partition identification of the target partition, wherein the source partition is one of the partitions and the target partition is another one of the target partitions.

In another embodiment an access time of the first storage device is shorter than an access time of the second storage device.

In another embodiment each of some or all of the data tables are stored across partitions, wherein each of the tables being stored across partitions is split in table portions comprising the data rows stored in each of the partitions across which the each of the tables is stored, wherein the data tables are column store data tables, wherein each column of each of the data tables stored only in one of the partitions is stored as a contiguous compressed data record in the only one of the partitions, wherein each column of each of the table portions stored in the respective partition is stored as the contiguous compressed data record in the respective partition. The moving of the entries is performed only in predetermined non-overlapping time intervals. The moving of the entry from its source partition to its target partition comprises moving each data row of the entry to be moved from the respective source table being stored in said source partition and comprising the each data row to the respective target table being stored in said target partition. The respective source table comprising the each data row and the respective target table used for inserting of the each data row are table portions of one of the data tables being stored across at least said source and said target partition and comprising the each data row. The moving of the each data row comprises the following: decompressing each of the compressed contiguous data records corresponding to the columns of the source table; decompressing each of the contiguous compressed data records corresponding to the columns of the target table; moving each of data entities of the each data row from the respective decompressed data record of the source table to the respective decompressed data record of the target table, wherein the respective decompressed data record of the source table and the respective decompressed data record of the target table correspond to one of the columns of the one of the data tables and the one of the columns comprises the each of the data entities, wherein each of the columns of the one of the data tables comprises the respective data entity of the each data row, wherein the each data entity is the primary key, or a secondary key, or the data value; after the moving of the each of the data entities compressing each of the decompressed contiguous data records corresponding to the columns of the source table; and after the moving of the each of the data entities compressing each of the decompressed contiguous data records corresponding to the columns of the target table.

In another embodiment the index rows are stored in index tables. The index tables are row store tables. Each of the data rows and its corresponding index row comprise the identical primary key. Each row of each of the index tables is stored as a contiguous data record. Each of the index tables has the respective data table comprising an identical set of the primary keys as the each of the index tables. The index allocation criterion is selected from a group consisting of the following index allocation criteria a)-c):
a) All index rows are stored on the first storage device;
b) The index rows corresponding to the data rows stored on the first storage device are stored on the first storage device and the index rows corresponding to the data rows stored on the second storage device are stored on the second storage device, wherein each of the index tables having a portion of the index rows stored on the first storage device and another portion of the index rows stored on the second storage device is stored across the first and second storage device, wherein the moving of the each data row further comprises moving of the contiguous data record of the respective index row comprising the same primary index as the each data row from the first storage device to the second storage device if the each data row is moved from the first storage device to the second storage device, wherein the moving of the each data row further comprises moving of the contiguous data record of the respective index row comprising the same primary index as the each data row from the second storage device to the first storage device if the each data row is moved from the second storage device to the first storage device, wherein the index table comprising the respective index row is stored across the first storage device and the second storage device;
c) The index rows corresponding to the data rows stored on the first storage device are stored on the first storage device and the index rows corresponding to the data rows stored on the second storage device are stored the second storage device before the executing of any of the queries by primary key, wherein each of the index tables having a portion of the index rows stored on the first storage device and another portion of the index rows stored on the second storage device is stored across the first and second storage device, wherein the computer-implemented method further comprises: generating a counter for each of the index rows, wherein an initial counter value of each of the counters equals to zero, wherein the executing of each of the queries by primary key further comprises increasing by unity of the counter value of the respective index row comprising the primary key specified in the each of the queries by primary key; and after an overall sum of the counter values exceeds a threshold value perform the following: identifying an index row set of index rows, wherein each of the index rows of the index row set has the respective counter value higher than any of the counter values of the counters of the index rows, which do not belong to the index row set, and a data volume of the index row set is below a threshold data volume; moving each of the index rows of the index row set from the second storage device to the first storage device if the each of the index rows of the index row set is stored on the second storage device; moving each of the index rows, which does not belong to the index row set, from the first storage device to the second storage device if the each of the index rows, which does not belong to the index row set, is stored on the first storage device; and after the identifying of the index row set stetting all of the counter values to zero.

In another embodiment each of some or all of the data rows comprises one or more secondary keys. Each of the secondary keys identifies a respective data row set of the data rows. Each of the index rows of the respective primary key further comprises all secondary keys of the data row comprising the respective primary key if the data row comprising the respective primary key comprises at least one of the secondary keys. The computer-implemented method further comprises: executing a query by secondary key on the database, wherein one of the secondary keys is specified in the query by secondary key, wherein the executing of the query by secondary key comprises: identifying all of the partition identifications stored in the index rows comprising the specified secondary key; and executing a query by secondary key on all of the partitions having their partition identification identified using the specified secondary key.

In another embodiment the index rows are stored in index tables. The index tables are row store tables. Each of the data rows and its corresponding index row comprise the identical primary key. Each row of each of the index tables is stored as a contiguous data record. Each of the index tables has the respective data table comprising an identical set of the primary keys as the each of the index tables. The index allocation criterion is selected from a group consisting of the following index allocation criteria a)-c):
a) all index rows are stored on the first storage device;
b) the index rows corresponding to the data rows stored on the first storage device are stored on the first storage device and the index rows corresponding to the data rows stored on the second storage device are stored on the second storage device, wherein each of the index tables having a portion of the index rows stored on the first storage device and another portion of the index rows stored on the second storage device is stored across the first and second storage device, wherein the moving of the each data row further comprises moving of the contiguous data record of the respective index row comprising the same primary index as the each data row from the first storage device to the second storage device if the each data row is moved from the first storage device to the second storage device, wherein the moving of the each data row further comprises moving of the contiguous data record of the respective index row comprising the same primary index as the each data row from the second storage device to the first storage device if the each data row is moved from the second storage device to the first storage device, wherein the index table comprising the respective index row is stored across the first storage device and the second storage device;
c) the index rows corresponding to the data rows stored on the first storage device are stored on the first storage device and the index rows corresponding to the data rows stored on the second storage device are stored the second storage device before the executing of any of the queries by primary key, wherein each of the index tables having a portion of the index rows stored on the first storage device and another portion of the index rows stored on the second storage device is stored across the first and second storage device, wherein the execution of the processor-executable code by the computer processor further causes the computing device to: generate a counter for each of the index rows, wherein an initial counter value of each of the counters equals to zero, wherein the executing of each of the queries by primary key further comprises increasing by unity of the counter value of the respective index row comprising the primary key specified in the each of the queries by primary key; and after an overall sum of the counter values exceeds a threshold value perform the following: identifying an index row set of index rows, wherein each of the index rows of the index row set has the respective counter value higher than any of the counter values of the counters of the index rows, which do not belong to the index row set, and a data volume of the index row set is below a threshold data volume; moving each of the index rows of the index row set from the second storage device to the first storage device if the each of the index rows of the index row set is stored on the second storage device; moving each of the index rows, which does not belong to the index row set, from the first storage device to the second storage device if the each of the index rows, which does not belong to the index row set, is stored on the first storage device; and after the identifying of the index row set stetting all of the counter values to zero.

In another embodiment each of some or all of the data rows comprises one or more secondary keys. Each of the secondary keys identifies a respective data row set of the data rows. Each of the index rows of the respective primary key further comprises all secondary keys of the data row comprising the respective primary key if the data row comprising the respective primary key comprises at least one of the secondary keys. The execution of the processor-executable code by the computer processor further causes the computing device to: execute a query by secondary key on the database, wherein one of the secondary keys is specified in the query by secondary key, wherein the executing of the query by secondary key comprises: identifying all of the partition identifications stored in the index rows comprising the specified secondary key; and executing a query by secondary key on all of the partitions having their partition identification identified using the specified secondary key. In another embodiment the index rows stored on the first storage are searched first in order to identify the partition identification associated with the primary key specified in the query by primary key. If the index rows stored on the first storage do not comprise said primary key then the index rows stored on the second storage are searched in order to identify the partition identification associated with the primary key specified in said query by the primary key.

In the aforementioned embodiments and in the following detailed description the partition identification is a code used for identification of the partitions. Each of the partition identifications uniquely identifies only one respective partition. Each of the partitions has the respective partition identification being different from partition identifications of the other partitions. For instance, partitions can be numbered, as it will be described in the detailed description.

In the aforementioned embodiments and in the following detailed description the primary key is a code used for identification of the data rows. The code can be for instance one or more number, one or more text words, or one or more combinations of text symbols and digits. Each of the primary key uniquely identifies only one respective data rows. Each of the data rows has the respective primary key being different from the primary keys of the other data rows. Execution of query by primary key returns only one data row comprising the primary key specified in the query by primary key if the data base comprises said data row, otherwise the execution of said query by primary key delivers no data rows. Examples of the primary keys will be illustrated in the detailed description.

In the aforementioned embodiments and in the following detailed description the secondary key is a code used for identification of the respective set of data rows.

The code can be for instance one or more number, one or more text words, or one or more combinations of text symbols and digits. Execution of query by secondary key returns all data rows of the respective set, if the data base comprises said set, otherwise the execution of said query by secondary key delivers no data rows, wherein each data row of said set comprises the secondary key specified in said query by secondary key. Examples of the secondary keys will be illustrated in the detailed description.

### Figures

Fig. 1 is a block diagram of a system.
Figs. 2a, b is an example database stored across partitions.
Fig. 3 illustrates index rows of the example database.
Figs. 4a, b is the example database after update.
Fig. 5 is illustrates the index rows of the example database after update.
Fig. 6 is a flow chart of a method for providing access to a database on a system.
Fig. 7 is a flow chart of a method for moving entries between partitions.
Fig. 8 is a flow chart of a method for storing frequently used index rows on a first storage.

### Detailed description

In the following description, reference is made to the accompanying drawings that form a part hereof, and in which is shown by way of illustration specific embodiments which may be practiced. These embodiments are described in sufficient detail to enable those skilled in the art to practice the invention, and it is to be understood that other embodiments may be utilized and that structural, electrical, and optical changes may be made without departing from the scope of the present invention. The following description of example embodiments is, therefore, not to be taken in a limited sense, and the scope of the present invention is defined by the appended claims.

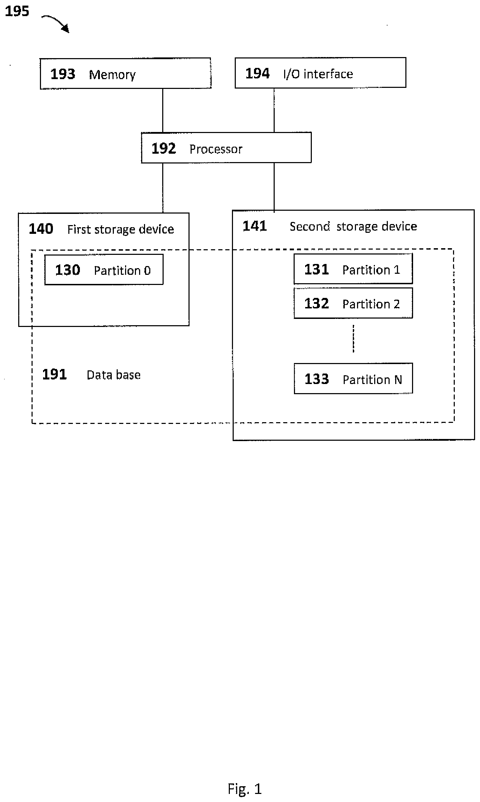

Fig. 1 illustrates a an exemplary system 195 that can provide a transparent access to a data base 191 stored across partitions "Partition 0"-"Parition N" 130-133. The system comprises a first storage device 140 and a second storage device 141. "Partition 0" is stored on the first storage device, while all other partitions "Partition 1"-"Partition N" are stored on the second storage device. In another implementation the partitions may be stored across the first and the second storage device in an arbitrary way. For instance, "Partition 0", "Partition 1 ", and "Partition 2" are stored on the first storage device and all other partitions "Partition 3"-"Partition N" are stored on the second storage device. The first storage device has a shorter access time than the second storage device. The first storage device may be implemented using Dynamic Random Access Memory (DRAM) and/or Static Random Access Memory (SRAM), while the second storage device may be implemented using one or more Hard Disk Drives (HDD) and/or one or more Solid State Drives (SSD). When the first and the second storage device are implemented as described above, then the first storage device comprises as usual only one of the partitions, because of the cost limiting factors determining that the first storage device is smaller than the second storage device. In this case storing a portion of the data base across several partitions on the first storage device may not result in acceleration of access to the data of the database stored on the first storage device. It will be necessary to search for required data in said several partitions having much smaller sizes in comparison to the partitions stored on the second storage device, while said several partitions united in one on the first storage device can be effectively searched as one massive of data. The single partition on the first storage device can be implemented as in-memory data base. The system further comprises a computing device. The computing device comprises a memory 193 storing processor-executable program code, and a computer processor (192) to execute the processor-executable program code in order to cause the computing device to provide access to the data base, to perform updates of the database, to execute query or a request to obtain specific data (e.g. query by primary key, query by secondary key), and to move entries of the database between the partitions. The queries may be formulated using the structured query language (SQL). The processor is communicatively coupled to the memory, the first storage device, and the second storage device. The processor may be further communicatively coupled to the I/O interface 194 for communicating with users and/or other computing devices/systems.

The database 191 may comprise any query-responsive data sources, e.g., an SQL relational database management system. In some implementations, the data source can include a relational database, a multi-dimensional database, an eXtendable Markup Language ("XML") document, or any other data storage system storing structured and/or unstructured data. The data stored in the database 191 can be distributed among several relational databases, warehouses, multi-dimensional databases, and/or any other data sources, and/or any combinations thereof. The data source can include one or more On-Line Analytical Processing ("OLAP") databases, spreadsheets, text documents, presentations, etc. Further, the database may comprise tabular data, row-based data stored in row format, column-based data stored in columnar format, and object-based data. Data of the database can be indexed and/or selectively replicated in an index to allow fast searching and retrieval.

In some implementations, the current subject matter system can retrieve business object data or any other data from the database in response to queries based on various selection criteria or parameter(s) which can have a correlation to time-based criteria that can be used for partitioning. In a typical access pattern, a date restriction or a status restriction can be used. A status restriction can be part of logic for separating hot data from cold data, which is discussed below. The date restriction can include criteria to partition the hot data from the cold data as well as partition the cold data sorted on the second storage device itself.

Each of the partitions has a respective partition identification. Each of the entries of the database comprises at least one data value indicative of allocation of the each of the entries in one of the partitions. Each of the entries is stored in one or more data rows of data tables stored in the database. Each of the data rows comprises a respective primary key for unique identification of the each of the data rows in the database. Each of some or all of the data rows comprises one or more secondary keys. Each of the secondary keys identifies a respective data row set of the data rows. Each of some or all of the data rows comprises data values.

Each of some or all of the data tables are being stored across at least two partitions. Each of the tables being stored across partitions is split in table portions comprising the data rows stored in each of the partitions across which the each of the tables is stored. Each of the table portions of the same table have the same table metadata describing the data table, i.e. names of the columns, sequence of the columns in the table, etc. The data tables are column store data tables. Each column of each of the data tables stored only in one of the partitions is stored as a contiguous compressed data record in the only one of the partitions. Each column of each of the table portions stored in the respective partition is stored as the contiguous compressed data record in the respective partition. Various data compression methods may be used for the contiguous data records of the data tables. Any entry of the database can be moved between partitions when one or more indicative data values of the any entry is modified. For instance, moving of the entries between partitions may be executed in the framework of aging of data, when the status of a portion of the entries is changed from "hot" to "cold".

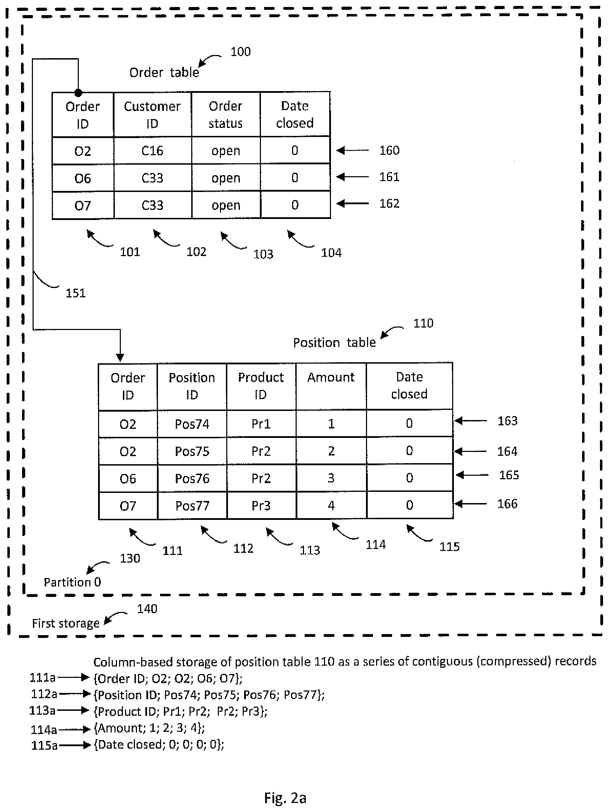

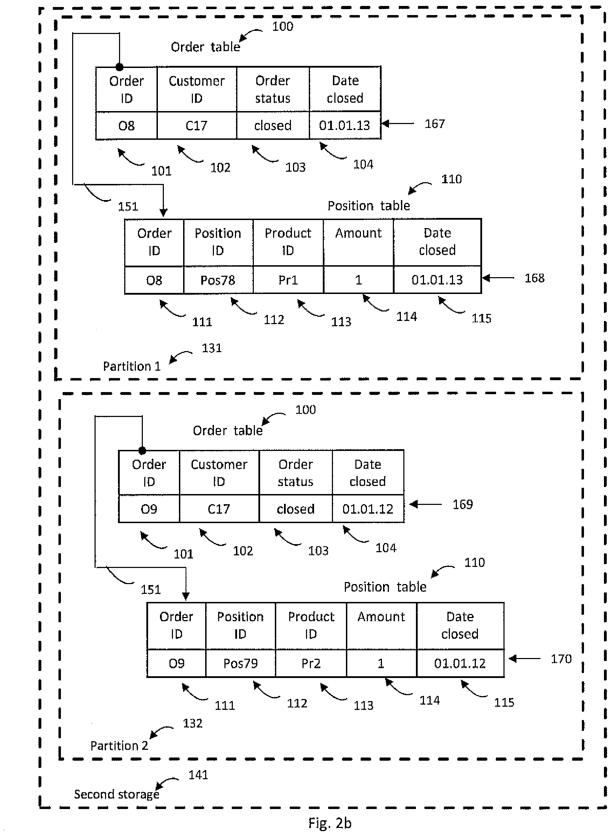

Figs. 2a and 2b illustrate an example database corresponding to the general description of the database mentioned above. The example data base is stored across 3 partitions 0-2 130-132. The "Partition 0" is stored on the first storage device 140 and comprises "hot" data/entries. "Partition 1" and "Partition 2" are stored on the second storage device 141 and comprise "cold" data/entries. The data base comprises "Oder table" 100 and "Position table" 110. Both of the data tables are stored across 3 partitions. The rows 160, 161, and 162 of the data table 100 are stored in the "Partition 0". The row 167 of the data table 100 is stored in the "Partition 1" and the row 169 of the data table 100 is stored in the "Partition 2". The rows 163-166 of the data table 110 are stored in the "Partition 0". The row 168 of the data table 110 is stored in the "Partition 1" and the row 170 of the data table 110 is stored in the "Partition 2".

The "Order table" 100 represents a list of purchase orders. The "Position table" represents details of purchase orders. The "Order table" has 4 columns "Order ID", "Custormer ID", "Order Status", and "Date closed". The "Order ID" column comprises order specifications 101 being primary keys for unique identification of each of the orders/entries in the database. The "Customer ID" column comprises customer identifications 102 being secondary keys for identification of a set of orders for each of the customers. The column "Order status" comprises data values 103 being indicative whether the order is closed or not, e.g. whether the products are delivered to customer or not. The column "Data closed" comprises dates when the orders are closed. If the order is not closed then the value in the column "Date closed" equals to 0. Each of the orders/entries has a respective unique row 160, 161, 162, 167, and 169 in the data table 100.

The "Position table" 110 comprises 5 columns "Order ID", "Position ID", "Product ID", "Amount", and "Date closed". The column "Order ID" in the data table 110 comprises customer identifications being secondary keys 111 for identification of sets of products of each of the orders/entries in the database. The column "Position ID" comprises position identifications 112 being primary keys for deification of each of the order position in the data table 110. The column "Product ID" comprises product identifications 113 being secondary keys for identification of sets of identical products in the data table 110. The column "Amount" comprises data values 114 specifying amount of products ordered in each of the positions. The column "Date closed" of the data table 110 comprises dates when the orders are closed. If the order is not closed then the value in the column "Date closed" equals to 0. Each of the positions in the data table 110 has a respective unique row 163-166, 168, 170.

The values in the columns "Date closed" are used as indicative data values for storing the data rows of data tables 110 and 100 across partitions. If the value in the column "Date closed" equals to 0, then the data row comprising this value is stored in the "Partition 0". If the order is closed in a year 2013, then the data row comprising this value is stored in the "Partition 1". If the order is closed in a year 2012, then the data row comprising this value is stored in the "Partition 2". The columns "Order ID" in the data tables 100 and 110 are linked by a foreign key relationship 151. Data table portions of the data tables 100 and 110 are stored column wise in each of the respective partitions. Each of the columns of each of the data table portions is stored as a contiguous data record in the respective partition. Data compression may be applied to each of the data records. For instance, the portion of the data table 110 is stored in the "Partition 0" as series of contiguous data records 111a, 112a, 113a, 114a, 115a (Fig. 2a).

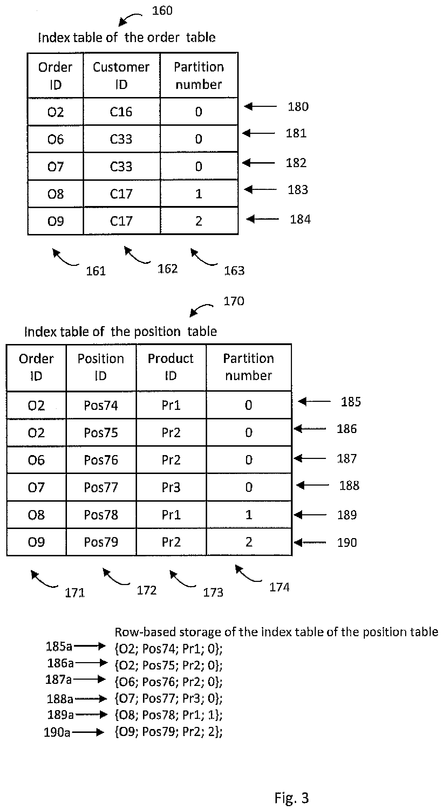

In order to facilitate access to the database, e.g. to execute queries by primary or secondary key not on entire database but only on partitions comprising data rows having primary keys or secondary keys specified in the queries, a row store index is generated. Index tables comprising index rows are illustrated on Fig. 3. Each data table of the database has a respective index table. The "order table" 100 has the respective "index table of the order table" 160. The "position table" 110 has the respective "index table of the position table" 170. Each data row has the respective index row and both rows comprise the same primary key (101, 161; 111, 171). Each of the index tables further comprises all secondary keys of the respective data row (102, 162; 112, 172; 113, 173) and the partition number (103, 174) of the respective data row. The pairs of the data rows and their respective index rows are listed as follows: 160, 180; 161, 181; 162, 182; 163, 185; 164, 186; 165, 187; 166, 188; 167, 182; 168, 189; 169, 184; 170, 190. The index rows of each of the index tables are stored row wise as contiguous data records. For instance, the index rows of the table 170 are stored as the contiguous data records 185a, 186a, 187a, 188a, 189a, 190a (Fig. 3).

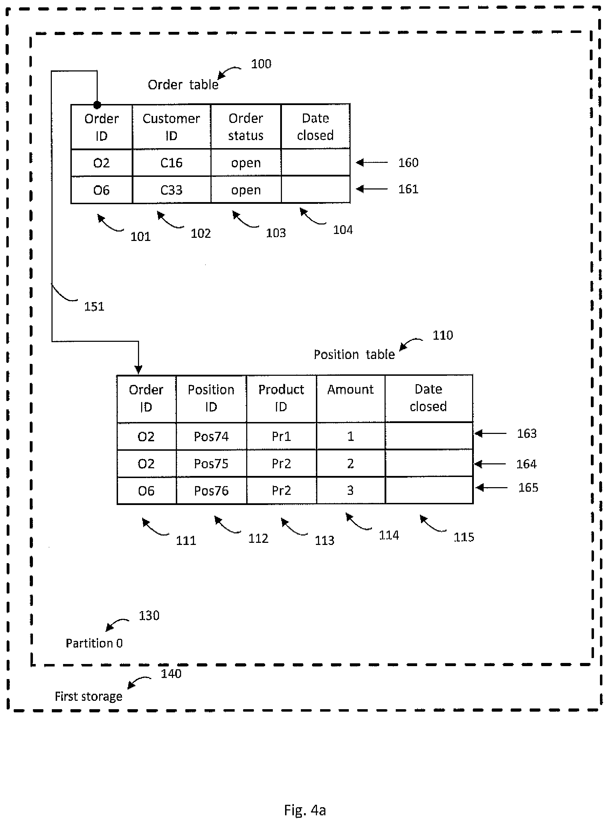

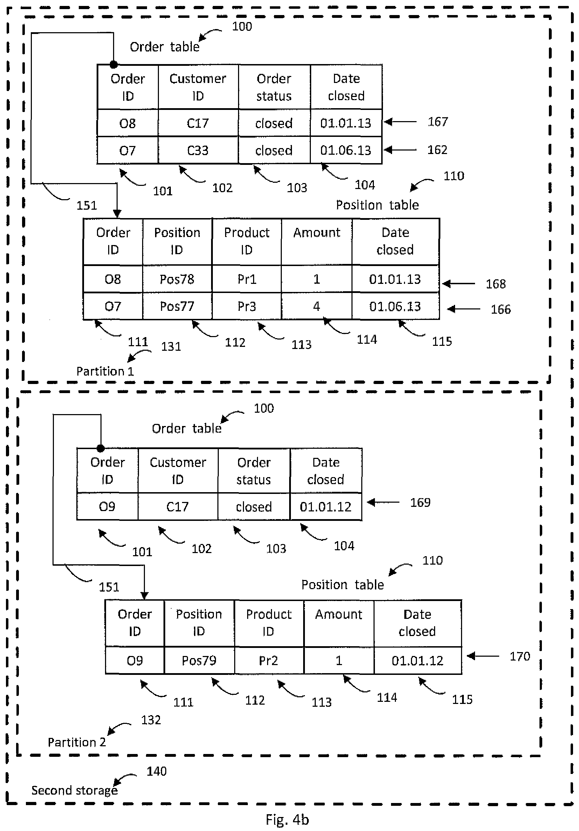

Figs. 4a and 4b illustrated the example database after completion of the order "O7". The order was closed on 01.06.13. Since the column "Date closed" comprises data values being indicative for allocation of the entry in one of the partitions and the aforementioned allocation criterion indicates that the entry of order "O7" has to be moved to the "Partition 1", the row 162 is moved from a table portion of the data table 100 in the "Partition 0" to a table portion of the data table 100 in the "Partition 1" and the row 166 is moved from a table portion of the data table 110 in the "Partition 0" to a table portion of the data table 110 in the "Partition 1 ".

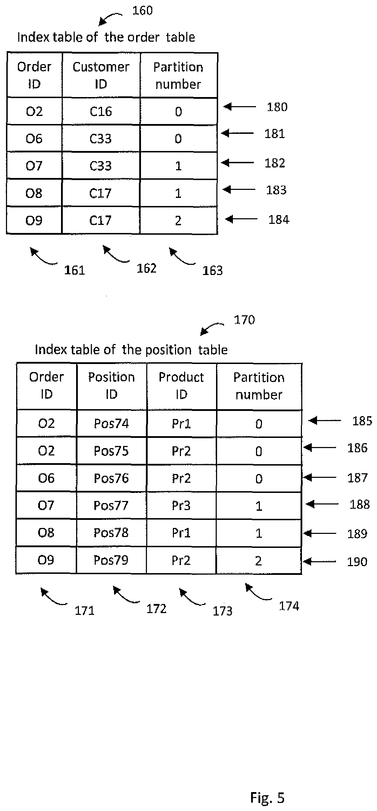

Fig. 5 illustrate a corresponding change in the index tables after the change in the database depicted on the Figs. 4a and 4b. Since the row 162 is moved to the "Partition 1" the partition number in the respective index row 182 is updated accordingly. Since the row 166 is moved to the "Partition 1" the partition number in the respective index row 188 is updated accordingly.

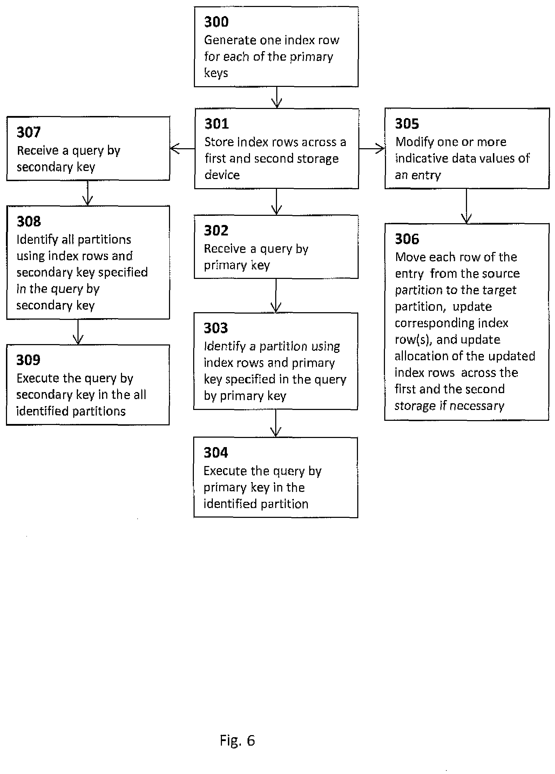

Fig. 6 illustrates a flow chart of a computer-implemented method for providing access to the database 191 on the system 195. In a process block 300 one index row for each of the primary keys of the data rows in the database is generated. Each of the index rows comprises the respective primary key and the partition identification associated with said respective primary key. Each of the primary keys of the respective data row is associated with the partition name of the partition in which said respective data row is stored. An example of execution of this process block is depicted on the Fig. 3 described above.

In a process block 301 at least a portion of the generated index rows is stored on the first storage device and the rest of the generated index rows are stored on the second storage device. The index rows stored on the first storage device comply with an index allocation criterion. Details regarding splitting of the index rows between the first and the second index storage will be discussed further on.

After execution of the process block 301 various processes may be executed. The choice of a particular process depends on particular task being executed by an application operating on the database. The branch of process blocks 302-304 is used for execution of a query by primary key. The branch of process blocks 305 and 306 is used for moving an entry from one partition to another. The branch of process blocks 307-309 is used for execution of a query by the secondary key.

In the process block 302 a query by primary key is received. One of the primary keys is specified in the query by primary key. In the process block 303 the partition identification associated with the specified primary key using the index rows stored on the first storage device is identified if the index rows stored on the first storage device comprise the specified primary key, otherwise the partition identification associated with the specified primary key using the index rows stored on the second storage device. In the process block 304 the query by primary key is executed on the partition having the identified partition identification using the specified primary key.

Execution of the process blocks 302-304 may be illustrated on the following example using the example database depicted in the Figs. 2a and 2b. For instance, the primary key "O2" is specified in the query by primary key. When this query is received in the process block 302, the partition identification "0" associated with the primary key "O2" is identified using index row 180 of the index table 160 on the Fig. 3 in the process block 303. Afterwards in the process block 304 the query by the primary key "O2" is executed in the "Partition 0" and delivers the row 160.

In the process block 307 a query by secondary key is received. One of the secondary keys is specified in the received query by secondary key. In the process block 308 all of the partition identifications stored in the index rows comprising the specified secondary key are identified. In the process block 309 the query by secondary key is executed in all of the partitions having their partition identification identified using the specified secondary key.

Execution of the process blocks 307-309 may be illustrated on the following example using the example database depicted in the Figs. 2a and 2b. For instance, the secondary key "C17" is specified in the query by secondary key. When this query is received in the process block 307, the partition identifications "1" and "2" associated with the secondary key "C17" are identified using index rows 183 and 184 of the index table 160 on the Fig. 3 in the process block 308. Afterwards in the process block 307 the query by the secondary key "C17" is executed in the "Partition 1" and in the "Partition 2" and delivers the rows 167 and 169.

In the process bock 305 one or more indicative data values of the entry are modified. The indicative data values are data values determining allocation of the respective entries in one of the partitions. In the process block 306 the entry is moved to the target partition if at least one data value indicative of allocation of the entry to be moved is modified and the at the least one modified data value indicates that the entry has to be moved to the target partition form the source partition in which it is currently stored, wherein all index rows comprising the respective primary keys of the data rows of the entry to be moved are updated after the entry to be moved is moved. In each of the updated index rows the partition identification of the source partition is substituted by the partition identification of the target partition. The source partition is one of the partitions and the target partition is another one of the target partitions.

Execution of the process blocks 305 and 306 is illustrated above in the example when order "O7" is closed.

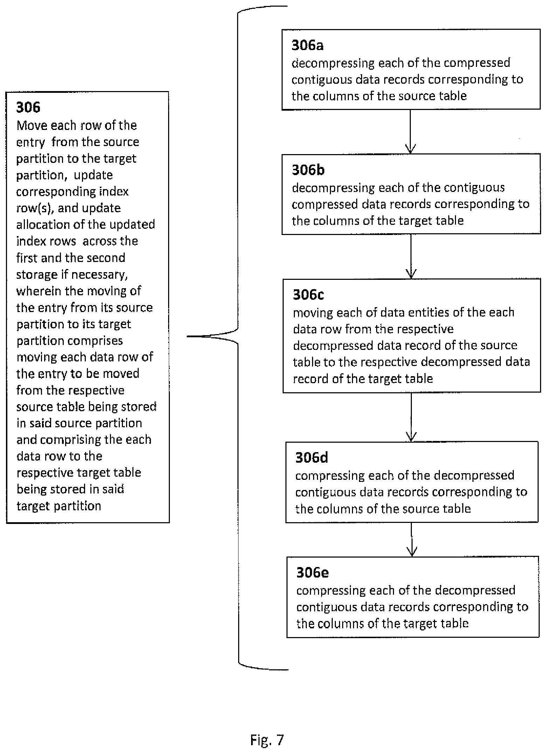

The data tables stored in the data base may be stored in a column store way, wherein each column of each table portion (or a complete data table) stored in one or the partitions is stored as a contiguous data record. Further each of the contiguous data records may be stored in the compressed way. This way of data storing has advantages because data compression saves storage space and storing of data tables in a column store way is beneficial for analytical tools operating on columns of data such as OLAP. On the other hand moving of data entries from one partition to another requires a special computer-implemented method depicted on Fig. 7. Since executing of this method may require substantial computing resources it may be executed only in predetermined non-overlapping time intervals. As it is mentioned in an extended version of the process block 306 on the Fig. 7 the moving of the entry from its source partition to its target partition comprises moving each data row of the entry to be moved from the respective source table being stored in said source partition and comprising the each data row to the respective target table being stored in said target partition. The respective source table comprising the each data row and the respective target table used for inserting of the each data row are table portions of one of the data tables being stored across at least said source and said target partition and comprising the each data row. Details of this procedure are described in the process blocks 306a-306e. These process blocks are executed for the each data row to be moved.

In the process block 306a each of the compressed contiguous data records corresponding to the columns of the source table comprising the each data row are decompressed and in the process block 306b each of the contiguous compressed data records corresponding to the columns of the target table in which the each data row to be added are decompressed. Those skilled in the art will understand that the process blocks 306a and 306b can be executed in any sequence or in parallel.

It is necessary to mention that moving of one of the data rows of the entry to be moved may be performed in case when said data row has to be moved to a partition where target table does not exist. In this case the target table is created using metadata of the source table and execution of the process block 306b is not necessary.

In the process block 306c each of data entities of the each data row of the entry to be moved is moved from the respective decompressed data record of the source table to the respective decompressed data record of the target table. The respective decompressed data record of the source table and the respective decompressed data record of the target table correspond to one of the columns of the one of the data tables and the one of the columns comprises the each of the data entities, wherein each of the columns of the one of the data tables comprises the respective data entity of the each data row. Each of the data entities may be but is not limited to: the primary key, the secondary key, or the data value.

When all data entities of each data row are moved from the source table to the target table, the process blocks 306d and 306e are executed. In the process block 306d each of the decompressed contiguous data records corresponding to the columns of the source table is compressed. In the process block 306e each of the decompressed contiguous data records corresponding to the columns of the target table is compressed. Those skilled in the art will understand that the process blocks 306d and 306e can be executed in any sequence or in parallel.

Execution of the process blocks 306a and 306b can be illustrated on the aforementioned example when the order "O7" is closed. The entry/order "O7" has two rows 162 and 166 in the data tables 100 and 110 correspondingly. In order to move the rows 162 and 166 to the "Partition 1" all columns of table portions of these data tables in the "Partition 0" and the "Partition 1" have to be decompressed.

Execution of the process blocks 306c and 306b can be illustrated as a continuation of the aforementioned example. The entities of the row 162 are moved one by one from the source portion of the data table 100 in the "Partition 0" to the target portion of the data table 100 in the "Partition 1 ". In particular, the data entity "O7" is deleted in the decompressed contiguous data record comprising data entity "O2" in the data row 160, data entity "O6" in the data row 161, and to be deleted entity "O7" in the data row 162. The data entity is added to the decompressed contiguous data record comprising data entity "O8" in the row 167. The rest of the data entities of the row 162 are processed in the same way. The row 166 is processed in the same way as the row 162.

Execution of the process blocks 306d and 306e can be illustrated as a continuation of the aforementioned example as well. Al contiguous decompressed data records of the columns of the source and the target table portions stored in the "Partition 0" and in the "Partition 1" are compressed.

The index rows are stored in index tables. The index tables are row store tables. Each of the data rows and its corresponding index row comprise the identical primary key. Each row of each of the index tables is stored as a contiguous data record. Each of the index tables has the respective data table comprising an identical set of the primary keys as the each of the index tables. This way of storage of the index tables enables easy moving of the index rows between the first and the second storage device. The contiguous data records of the index rows are not compressed and moving of each of the index rows from one storage device to another requires processing of only one contiguous data record. As a result thereof and in contrast to the data rows the index records can be moved between storage devices at any time without overloading computer resources. The primary benefit of this solution is that a portion of the index rows stored on the first storage device can be instantly updated. This feature is important because memory space on the first storage device is much more expensive and therefore smaller than memory space on the second storage device. Storing of all index rows on the first device storage may require substantial reduction of memory space on the first storage device used for storing of the "hot" data.

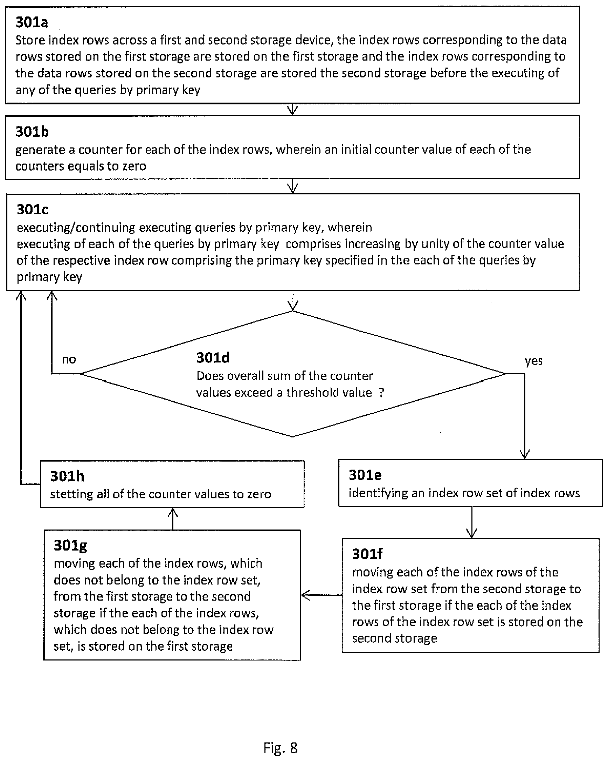

Depending on particular implementation based on the discussion of possible constraints above the index allocation criterion can be selected from a group consisting of the following index allocation criteria a)-c).
a) All index rows are stored on the first storage device. This solution can be applied when the memory space of the first storage device used for storing of the index rows is not limited by any constraints.
b) The index rows corresponding to the data rows stored on the first storage device are stored on the first storage device and the index rows corresponding to the data rows stored on the second storage device are stored on the second storage device. Each of the index tables having a portion of the index rows stored on the first storage device and another portion of the index rows stored on the second storage device is stored across the first and second storage device. Each of the index tables being stored across the first storage device and the second storage device is split in two index table portions comprising the index rows stored on each of the storage devices. Each of the index table portions of the same index table have the same table metadata describing the index table, i.e. names of the columns, sequence of the columns in the table, etc. The moving of the each data row in the process block 306 further comprises moving of the contiguous data record of the respective index row comprising the same primary index as the each data row from the first storage device to the second storage device if the each data row is moved from the first storage device to the second storage device, and the moving of the each data row in the process block 306 further comprises moving of the contiguous data record of the respective index row comprising the same primary index as the each data row from the second storage device to the first storage device if the each data row is moved from the second storage device to the first storage device, wherein the index table comprising the respective index row is stored across the first storage device and the second storage device. This solution can be applied when the memory space of the first storage device used for storing of the index rows is limited and all index rows cannot be stored on the first storage device.
c) The following solution/algorithm can be used when the data volume of a data volume of the index rows is limited by a threshold data volume. After the index rows are generated in the process block 300 a sequence of process blocks 301a-301f depicted on Fig. 8 are executed.

In the process block 301a the index rows corresponding to the data rows stored on the first storage device are stored on the first storage device and the index rows corresponding to the data rows stored on the second storage device are stored the second storage device, wherein each of the index tables having a portion of the index rows stored on the first storage device and another portion of the index rows stored on the second storage device is stored across the first and second storage device. Alternatively all index rows can be stored on the second storage device, or a portion of the index rows corresponding to the data rows stored on the first storage device is stored on the first storage device if a data volume of all index rows corresponding to the data rows stored on the first storage device is above the data threshold volume, wherein a data volume of the portion of the index rows is below the threshold data volume. The index rows of this portion may be selected at random. Preferably this process block is executed before executing of any of the queries by primary key.

In the process block 301 b a counter for each of the index rows is generated. This may be implemented by adding a counter column to each of the index tables. In each counter column cell of the respective index row a value of the counter of the respective index row is stored. An initial counter value of each of the counters equals to zero.

In the process block 301c queries by primary key are executed. The executing of each of the queries by primary key (Process blocks 302-304) further comprises increasing by unity of the counter value of the respective index row comprising the primary key specified in the each of the queries by primary key. The decision process block 304d cause execution of the process block 301c until an overall sum of the counter values exceeds a threshold value. The threshold value may be selected big enough in order to provide a meaningful statistics for identifying the most frequently used index rows.

When the overall sum of the of the counter values exceeds a threshold value the decision process block 301d cause execution of the process block 301e. In the process block 301e an index row set of index rows is identified. Each of the index rows of the index row set has the respective counter value higher than any of the counter values of the counters of the index rows, which do not belong to the index row set. A data volume of the index row set is below a threshold data volume. In this way the most frequently used index rows are selected into the index row set. Afterwards in the process blocks 301f and 301g the index rows are moved between the first storage device and the second storage device in order to reach a sate when all of the index rows of the index row set are stored on the first storage device and the rest of the index rows are stored on the second storage device. As a result thereof the most frequently index rows are stored on the first storage device and their data volume is below the threshold data volume.

In the process block 301f each of the index rows of the index row set is moved from the second storage device to the first storage device if the each of the index rows of the index row set is stored on the second storage device.

In the process block 301g each of the index rows, which does not belong to the index row set, is moved from the first storage device to the second storage device if the each of the index rows, which does not belong to the index row set, is stored on the first storage device. The process blocks 301f and 301 g can be executed in any sequence or in parallel. Different processes may be executed on the data base, as a result thereof a list of the most frequently used index rows may change in time. Thus process blocks 301 c, 301e, 301f, 301g and the decision process block 301d have to be repeated in order to follow the trend of changing of the list of the most frequently used index rows. In order to avoid overflow of the counter values all of the counter values are set to zero in the process block 301 h. The process block 301 h is executed after the process block 301 e. Execution of the process blocks 301 f, 301 g, and 301 h causes execution of the process block 301 c if the next iteration, wherein the next index row set of the most frequently used index rows needs to be determined, has to be executed.

## Claims

1. A system (195) comprising:
a first storage device (140);
a second storage device (141), wherein a database (191), containing entries, is stored across partitions (130-133), the first storage device comprises one partition (130) of the partitions, the second storage device comprises the other partitions (131-133) except the one of the first storage device, each of the partitions having a respective partition identification for identification of that partition, wherein each of the entries is stored in one or more data rows (160, 163, 164; 161, 165; 162, 166; 167, 168; 169, 170) of data tables (100, 110) stored in the database, wherein each of the data rows comprises a respective primary key (101, 112) for identification of that data row, wherein each of the entries comprises at least one data value (104, 115) indicative of allocation of the each of the entries in one of the partitions; and
a computing device comprising:
a memory (193) storing processor-executable program code, and
a computer processor (192) to execute the processor-executable program code in order to cause the computing device to:
• generate, for each of the primary keys (101, 112), a respective index row (180-190) comprising the respective primary key and the partition identification associated with said respective primary key (300); and
• execute a query by primary key on the database, wherein one of the primary keys is specified in the query by primary key, wherein the executing of the query by primary key comprises:
▪ identifying the partition identification associated with the specified primary key using the index rows (303);
▪ executing a query by primary key on the partition having the identified partition identification using the specified primary key (304);
• store at least a portion of the index rows on the first storage device, and storing all index rows, which are not stored on the first storage device, on the second storage device, wherein the index rows stored on the first storage device comply with an index allocation criterion (301), wherein the identifying of the partition identification associated with the specified primary key is performed using the index rows stored on the first storage device if the index rows stored on the first storage device comprise the specified primary key otherwise the identifying of the partition identification associated with the specified primary key is performed using the index rows stored on the second storage device;
• modify one or more indicative data values of the entry (305); and
• move the entry to a target partition if at least one data value indicative of allocation of the entry to be moved is modified and the at the least one modified data value indicates that the entry has to be moved to the target partition from a source partition in which it is currently stored, wherein all index rows comprising the respective primary keys of the data rows of the entry to be moved are updated after the entry to be moved is moved, wherein in each of the updated index rows the partition identification of the source partition is substituted by the partition identification of the target partition, wherein the source partition (130) is one of the partitions (130-133) and the target partition (131) is another one of the partitions (130-133), wherein each of some or all of the data tables are stored across partitions, wherein each of the tables being stored across partitions is split in table portions comprising the data rows stored in each of the partitions across which the each of the tables is stored, wherein the moving of the entry from its source partition to its target partition comprises moving each data row of the entry to be moved from the respective source data table being stored in said source partition and comprising the each data row to the respective target data table being stored in said target partition, wherein the respective source table comprising the each data row and the respective target table used for inserting of the each data row are table portions of one of the data tables being stored across at least said source and said target partition and comprising the each data row,
wherein the system is **characterized in that**, that the index rows are stored in index tables, wherein the index tables are row store tables, wherein each of the data rows and its corresponding index row comprise the identical primary key, each row of each of the index tables is stored as a contiguous data record (185a, 186a, 187a, 189a, 190a), each of the index tables has the respective data table comprising an identical set of the primary keys as the each of the index tables, wherein the index allocation criterion is selected from a group consisting of the following index allocation criteria a)-c):
a) all index rows are stored on the first storage device;
b) the index rows corresponding to the data rows stored on the first storage device are stored on the first storage device and the index rows corresponding to the data rows stored on the second storage device are stored on the second storage device, wherein each of the index tables having a portion of the index rows stored on the first storage device and another portion of the index rows stored on the second storage device is stored across the first and second storage device, wherein the moving of the each data row further comprises moving of the contiguous data record of the respective index row comprising the same primary index as the each data row from the first storage device to the second storage device if the each data row is moved from the first storage device to the second storage device, wherein the moving of the each data row further comprises moving of the contiguous data record of the respective index row comprising the same primary index as the each data row from the second storage device to the first storage device if the each data row is moved from the second storage device to the first storage device, wherein the index table comprising the respective index row is stored across the first storage device and the second storage device if the each data row is moved from the second storage device to the first storage device;
c) the index rows corresponding to the data rows stored on the first storage device are stored on the first storage device and the index rows corresponding to the data rows stored on the second storage device are stored the second storage device before the executing of any of the queries by primary key (301 a), wherein each of the index tables having a portion of the index rows stored on the first storage device and another portion of the index rows stored on the second storage device is stored across the first storage device and the second storage device, wherein the execution of the processor-executable code by the computer processor further causes the computing device to:
• generate a counter for each of the index rows (301 b), wherein an initial counter value of each of the counters equals to zero, wherein the executing of each of the queries by primary key further comprises increasing by unity of the counter value of the respective index row comprising the primary key specified in the each of the queries by primary key (301c); and
• after an overall sum of the counter values exceeds a threshold value (301d) perform the following:
▪ identifying an index row set of index rows, wherein each of the index rows of the index row set has the respective counter value higher than any of the counter values of the counters of the index rows, which do not belong to the index row set, and a data volume of the index row set is below a threshold data volume (301 e);
▪ moving each of the index rows of the index row set from the second storage device to the first storage device if the each of the index rows of the index row set is stored on the second storage device (301f);
▪ moving each of the index rows, which does not belong to the index row set, from the first storage device to the second storage device if the each of the index rows, which does not belong to the index row set, is stored on the first storage device (301g); and
▪ after the identifying of the index row set setting all of the counter values to zero (301 h);
wherein the data tables are column store data tables, wherein each column of each of the data tables stored only in one of the partitions is stored as a compressed contiguous data record in the only one of the partitions, wherein each column of each of the table portions stored in the respective partition is stored as the compressed contiguous data record (111a, 112a, 113a, 114a, 115a) in the respective partition, wherein the moving of the each data row comprises:
• decompressing each of the compressed contiguous data records corresponding to the columns of the source table (306a);
• decompressing each of the compressed contiguous data records corresponding to the columns of the target table (306b);
• moving each of data entities of the each data row from the respective decompressed data record of the source table to the respective decompressed data record of the target table, wherein the respective decompressed data record of the source table and the respective decompressed data record of the target table correspond to one of the columns of the one of the data tables and the one of the columns comprises the each of the data entities, wherein each of the columns of the one of the data tables comprises the respective data entity of the each data row, wherein the each data entity is the primary key, or a secondary key, or the data value (306c);
• after the moving of the each of the data entities compressing each of the decompressed contiguous data records corresponding to the columns of the source table (306d); and
• after the moving of the each of the data entities compressing each of the decompressed contiguous data records corresponding to the columns of the target table (306e).

2. The system of claim 1, wherein an access time of the first storage device is shorter than an access time of the second storage device.

3. The system of any one of the preceding claims, wherein each of some or all of the data rows comprises one or more secondary keys (101, 102, 111-113), each of the secondary keys identifies a respective data row set of the data rows, wherein each of the index rows of the respective primary key further comprises all secondary keys of the data row comprising the respective primary key if the data row comprising the respective primary key comprises at least one of the secondary keys, wherein the execution of the processor-executable code by the computer processor further causes the computing device to:
• execute a query by secondary key on the database, wherein one of the secondary keys is specified in the query by secondary key, wherein the executing of the query by secondary key comprises:
▪ identifying all of the partition identifications stored in the index rows comprising the specified secondary key (308); and
▪ executing a query by secondary key on all of the partitions having their partition identification identified using the specified secondary key (309).

4. A computer-implemented method for providing access to a database on a system (195), wherein the database (191), comprising entries, is stored across partitions (130-133), the system comprising a first storage device (140), a second storage device (141), and a computing device, the first storage device comprising one partition (130) of the partitions, the second storage device comprising the other partitions (131-132) except the one of the first storage device, each of the partitions having a respective partition identification for identification of that partition, wherein each of the entries is stored in one or more data rows (160, 163, 164; 161, 165; 162, 166; 167, 168; 169, 170) of data tables (100, 110) stored in the database, wherein each of the data rows comprises a respective primary key (101, 112) for identification of that data row, wherein the computing device comprises a memory (193) storing processor-executable program code and a computer processor (192) to execute the processor-executable program code in order to cause the computing device to perform the computer-implemented method, wherein each of the entries comprises at least one data value (104, 115) indicative of allocation of the each of the entries in one of the partitions, the computer-implemented method comprising:
• generating, for each of the primary keys (101, 112), a respective index row (180-190) comprising the respective primary key and the partition identification associated with said respective primary key; and
• executing a query by primary key on the database, wherein one of the primary keys is specified in the query by primary key, wherein the executing of the query by primary key comprises:
▪ identifying the partition identification associated with the specified primary key using the index rows (303);
▪ executing a query by primary key on the partition having the identified partition identification using the specified primary key (304);
• storing at least a portion of the index rows on the first storage device, and storing all index rows, which are not stored on the first storage device, on the second storage device, wherein the index rows stored on the first storage device comply with an index allocation criterion (301), wherein the identifying of the partition identification associated with the specified primary key is performed using the index rows stored on the first storage device if the index rows stored on the first storage device comprise the specified primary key otherwise the identifying of the partition identification associated with the specified primary key is performed using the index rows stored on the second storage device;
• modifying one or more indicative data values of the entry (305); and
• moving the entry to a target partition if at least one data value indicative of allocation of the entry to be moved is modified and the at the least one modified data value indicates that the entry has to be moved to the target partition from a source partition in which it is currently stored, wherein all index rows comprising the respective primary keys of the data rows of the entry to be moved are updated after the entry to be moved is moved, wherein in each of the updated index rows the partition identification of the source partition is substituted by the partition identification of the target partition, wherein the source partition (130) is one of the partitions (130-133) and the target partition (131) is another one of the partitions (130-133), each of some or all of the data tables being stored across at least two partitions, wherein each of the tables being stored across partitions is split in table portions comprising the data rows stored in each of the partitions across which the each of the tables is stored, wherein the moving of the entry from its source partition to its target partition comprises moving each data row of the entry to be moved from the respective source data table being stored in said source partition and comprising the each data row to the respective target data table being stored in said target partition, wherein the respective source table comprising the each data row and the respective target table used for inserting of the each data row are table portions of one of the data tables being stored across at least said source and said target partition and comprising the each data row,
wherein the index rows are stored in index tables, the index tables are row store tables, each of the data rows and its corresponding index row comprise the identical primary key, each row of each of the index tables is stored as a contiguous data record (185a, 186a, 187a, 189a, 190a), each of the index tables has the respective data table comprising an identical set of the primary keys as the each of the index tables, wherein the index allocation criterion is selected from a group consisting of the following index allocation criteria a)-c):
a) all index rows are stored on the first storage device;
b) the index rows corresponding to the data rows stored on the first storage device are stored on the first storage device and the index rows corresponding to the data rows stored on the second storage device are stored on the second storage device, wherein each of the index tables having a portion of the index rows stored on the first storage device and another portion of the index rows stored on the second storage device is stored across the first and second storage device, wherein the moving of the each data row further comprises moving of the contiguous data record of the respective index row comprising the same primary index as the each data row from the first storage device to the second storage device if the each data row is moved from the first storage device to the second storage device, wherein the moving of the each data row further comprises moving of the contiguous data record of the respective index row comprising the same primary index as the each data row from the second storage device to the first storage device if the each data row is moved from the second storage device to the first storage device, wherein the index table comprising the respective index row is stored across the first storage device and the second storage device if the each data row is moved from the second storage device to the first storage device;
c) the index rows corresponding to the data rows stored on the first storage device are stored on the first storage device and the index rows corresponding to the data rows stored on the second storage device are stored the second storage device before the executing of any of the queries by primary key (301 a), wherein each of the index tables having a portion of the index rows stored on the first storage device and another portion of the index rows stored on the second storage device is stored across the first storage device and the second storage device, wherein the computer-implemented method further comprises:
• generating a counter for each of the index rows (301 b), wherein an initial counter value of each of the counters equals to zero, wherein the executing of each of the queries by primary key further comprises increasing by unity of the counter value of the respective index row comprising the primary key specified in the each of the queries by primary key (301 c); and
• after an overall sum of the counter values exceeds a threshold value (301d) perform the following:
▪ identifying an index row set of index rows, wherein each of the index rows of the index row set has the respective counter value higher than any of the counter values of the counters of the index rows, which do not belong to the index row set, and a data volume of the index row set is below a threshold data volume (301e);
▪ moving each of the index rows of the index row set from the second storage device to the first storage device if the each of the index rows of the index row set is stored on the second storage device (301f);
▪ moving each of the index rows, which does not belong to the index row set, from the first storage device to the second storage device if the each of the index rows, which does not belong to the index row set, is stored on the first storage device (301 g); and
▪ after the identifying of the index row set setting all of the counter values to zero (301 h);
wherein the data tables are column store data tables, wherein each column of each of the data tables stored only in one of the partitions is stored as a compressed contiguous data record in the only one of the partitions, wherein each column of each of the table portions stored in the respective partition is stored as the compressed contiguous data record (111a, 112a, 113a, 114a, 115a) in the respective partition, wherein the moving of the each data row comprises:
• decompressing each of the compressed contiguous data records corresponding to the columns of the source table (306a);
• decompressing each of the compressed contiguous data records corresponding to the columns of the target table (306b);
• moving each of data entities of the each data row from the respective decompressed data record of the source table to the respective decompressed data record of the target table, wherein the respective decompressed data record of the source table and the respective decompressed data record of the target table correspond to one of the columns of the one of the data tables and the one of the columns comprises the each of the data entities, wherein each of the columns of the one of the data tables comprises the respective data entity of the each data row, wherein the each data entity is the primary key, or a secondary key, or the data value (306c);
• after the moving of the each of the data entities compressing each of the decompressed contiguous data records corresponding to the columns of the source table (306d); and
• after the moving of the each of the data entities compressing each of the decompressed contiguous data records corresponding to the columns of the target table(306e).

5. The computer-implemented method of claim 4, wherein an access time of the first storage device is shorter than an access time of the second storage device.

6. The computer-implemented method of one of the preceding claims 4 or 5, wherein each of some or all of the data rows comprises one or more secondary keys (101, 102, 111-113), each of the secondary keys identifies a respective data row set of the data rows, wherein each of the index rows of the respective primary key further comprises all secondary keys of the data row comprising the respective primary key if the data row comprising the respective primary key comprises at least one of the secondary keys, wherein the computer-implemented method further comprises:
• executing a query by secondary key on the database, wherein one of the secondary keys is specified in the query by secondary key, wherein the executing of the query by secondary key comprises:
▪ identifying all of the partition identifications stored in the index rows comprising the specified secondary key (308); and
▪ executing a query by secondary key on all of the partitions having their partition identification identified using the specified secondary key (309).

7. A computer readable medium having stored thereon a computer executable program code for execution by a computer processor controlling a computing device of a system, the system comprising a first storage device, a second storage device, and the computing device, wherein execution of the instructions of the executable program code causes the computing device to perform the computer-implemented method of claims 4-6 on the system.

## Patentansprüche

1. System (195), umfassend:
eine erste Speichervorrichtung (140);
eine zweite Speichervorrichtung (141), wobei eine Datenbank (191), die Einträge enthält, auf Partitionen (130-133) verteilt gespeichert wird, die erste Speichervorrichtung eine Partition (130) von den Partitionen enthält, die zweite Speichervorrichtung die anderen Partitionen (131-133) außer der einen von der ersten Speichervorrichtung enthält, jede von den Partitionen eine entsprechende Partitionskennung zur Identifizierung dieser Partition aufweist, wobei jeder von den Einträgen in einer oder mehreren Datenzeilen (160, 163, 164; 161, 165; 162, 166; 167, 168; 169, 170) von in der Datenbank gespeicherten Datentabellen (100, 110) gespeichert wird, wobei jede von den Datenzeilen einen entsprechenden Primärschlüssel (101, 112) für die Identifizierung dieser Datenzeile umfasst, wobei jeder von den Einträgen mindestens einen Datenwert (104, 115) umfasst, der eine Zuordnung des jeweiligen Eintrags zu einer der Partitionen angibt; und eine Rechenvorrichtung, die umfasst:
einen Speicher (193), in dem ein prozessorausführbarer Programmcode gespeichert wird, und
einen Computerprozessor (192) zur Ausführung des prozessorausführbaren Programmcodes, um zu bewirken, dass die Rechenvorrichtung:
• für jeden der Primärschlüssel (101, 112) eine entsprechende Indexzeile (180-190) generiert, die den entsprechenden Primärschlüssel und die Partitionskennung umfasst, die mit dem entsprechenden Primärschlüssel (300) assoziiert ist; und
• eine Primärschlüsselabfrage an der Datenbank ausführt, wobei einer von den Primärschlüsseln in der Primärschlüsselabfrage spezifiziert wird, wobei die Ausführung der Primärschlüsselabfrage umfasst:
▪ Identifizieren der Partitionskennung, die mit dem spezifizierten Primärschlüssel assoziiert ist, unter Verwendung der Indexzeilen (303);
▪ Ausführen der Primärschlüsselabfrage an der Partition mit der identifizierten Partitionskennung unter Verwendung des spezifizierten Primärschlüssels (304);
• zumindest einen Teil der Indexzeilen in der ersten Speichervorrichtung speichert und alle Indexzeilen, die nicht in der ersten Speichervorrichtung gespeichert werden, in der zweiten Speichervorrichtung speichert, wobei die in der ersten Speichervorrichtung gespeicherten Indexzeilen ein Indexzuordnungskriterium (301) erfüllen, wobei die Identifizierung der Partitionskennung, die mit dem spezifizierten Primärschlüssel assoziiert ist, unter Verwendung der Indexzeilen durchgeführt wird, die in der ersten Speichervorrichtung gespeichert sind, wenn die in der ersten Speichervorrichtung gespeicherten Indexzeilen den spezifizierten Primärschlüssel umfassen, und andernfalls die Identifizierung der Partitionskennung, die mit dem spezifizierten Primärschlüssel assoziiert ist, unter Verwendung der Indexzeilen durchgeführt wird, die in der zweiten Speichervorrichtung gespeichert sind;
• einen oder mehrere Hinweis-Datenwerte des Eintrags (305) modifiziert; und
• den Eintrag in eine Zielpartition verschiebt, wenn mindestens ein Datenwert, der einen Hinweis gibt auf eine Zuordnung des zu verschiebenden Eintrags, modifiziert ist und der mindestens eine modifizierte Datenwert einen Hinweis darauf gibt, dass der Eintrag aus einer Quellpartition, in der er aktuell gespeichert ist, in die Zielpartition verschoben werden soll, wobei alle Indexzeilen, welche die entsprechenden Primärschlüssel der Datenzeilen des zu verschiebenden Eintrags umfassen, nach der Verschiebung des zu verschiebenden Eintrags aktualisiert werden, wobei in jeder von den aktualisierten Indexzeilen die Partitionskennung der Quellpartition durch die Partitionskennung der Zielpartition ersetzt wird, wobei die Quellpartition (130) eine von den Partitionen (130-133) ist und die Zielpartition (131) eine andere von den Partitionen (130-133) ist, wobei von manchen oder allen von den Datentabellen jede auf Partitionen verteilt gespeichert wird, wobei jede von den Tabellen, die auf Partitionen verteilt gespeichert werden, in Tabellenteile aufgeteilt wird, welche die Datenzeilen umfassen, die in den einzelnen Partitionen gespeichert werden, auf die verteilt die einzelnen Tabellen gespeichert werden, wobei das Verschieben des Eintrags aus seiner Quellpartition in seine Zielpartition das Verschieben jeder Datenzeile des zu verschiebenden Eintrags aus der entsprechenden in der Quellpartition gespeicherten Quelldatentabelle, welche die jeweilige Datenzeile umfasst, in die entsprechende in der Zielpartition gespeicherte Ziedatentabelle umfasst, wobei die entsprechende Quelltabelle, welche die jeweilige Datenzeile umfasst, und die entsprechende Zieltabelle, die für die Einfügung der jeweiligen Datenzeile verwendet wird, Tabellenteile von einer der Datentabellen sind, die verteilt auf zumindest die Quell- und die Zielpartition gespeichert wird und die jeweilige Datenzeile umfasst,
wobei das System **dadurch gekennzeichnet ist, dass** die Indexzeilen in Indextabellen gespeichert werden, wobei die Indextabellen Zeilenspeichertabellen sind, wobei jede von den Datenzeilen und ihre entsprechende Indexzeile den identischen Primärschlüssel umfassen, jede Zeile von jeder der Indextabellen als zusammenhängende Datenaufzeichnung (185a, 186a, 187a, 189a, 190a) gespeichert wird, jede von den Indextabellen die entsprechende Datentabelle aufweist, die einen identischen Satz an Primärschlüsseln wie die jeweilige Indextabelle umfasst, wobei das Indexzuordnungskriterium ausgewählt ist aus einer Gruppe, die aus den folgenden Indexzuordnungskriterien a)-c) besteht:
a) alle Indexzeilen werden in der ersten Speichervorrichtung gespeichert;
b) die Indexzeilen, die den Datenzeilen entsprechen, die in der ersten Speichervorrichtung gespeichert sind, werden in der ersten Speichervorrichtung gespeichert und die Indexzeilen, die den Datenzeilen entsprechen, die in der zweiten Speichervorrichtung gespeichert sind, werden in der zweiten Speichervorrichtung gespeichert, wobei jede der Indextabellen, von denen ein Teil der Indexzeilen in der ersten Speichervorrichtung gespeichert wird und ein anderer Teil der Indexzeilen in der zweiten Speichervorrichtung gespeichert wird, verteilt auf die erste und die zweite Speichervorrichtung gespeichert wird, wobei das Verschieben der jeweiligen Datenzeile ferner das Verschieben der zusammenhängenden Datenaufzeichnung der entsprechenden Indexzeile, die den gleichen Primärindex umfasst wie die jeweilige Datenzeile, aus der ersten Speichervorrichtung in die zweite Speichervorrichtung umfasst, wenn die jeweilige Datenzeile aus der ersten Speichervorrichtung in die zweite Speichervorrichtung verschoben wird, wobei das Verschieben der jeweiligen Datenzeile ferner das Verschieben der zusammenhängenden Datenaufzeichnung der entsprechenden Indexzeile, die den gleichen Primärindex umfasst wie die jeweilige Datenzeile, aus der zweiten Speichervorrichtung in die erste Speichervorrichtung umfasst, wenn die jeweilige Datenzeile aus der zweiten Speichervorrichtung in die erste Speichervorrichtung verschoben wird, wobei die Indextabelle, welche die entsprechende Indexzeile umfasst, verteilt auf die erste Speichervorrichtung und die zweite Speichervorrichtung gespeichert wird, wenn die jeweilige Datenzeile aus der zweiten Speichervorrichtung in die erste Speichervorrichtung verschoben wird;
c) die Indexzeilen, die den Datenzeilen entsprechen, die in der ersten Speichervorrichtung gespeichert sind, werden in der ersten Speichervorrichtung gespeichert und die Indexzeilen, die den Datenzeilen entsprechen, die in der zweiten Speichervorrichtung gespeichert sind, werden in der zweiten Speichervorrichtung gespeichert, bevor eine der Primärschlüsselabfragen (301a) ausgeführt wird, wobei die jeweilige Indextabelle, von der ein Teil der Indexzeilen in der ersten Speichervorrichtung gespeichert wird und ein anderer Teil der Indexzeilen in der zweiten Speichervorrichtung gespeichert wird, verteilt auf die erste Speichervorrichtung und die zweite Speichervorrichtung gespeichert wird, wobei die Ausführung des prozessorausführbaren Codes durch den Computerprozessor ferner bewirkt, dass die Rechenvorrichtung:
• einen Zähler für jede von den Indexzeilen (301b) generiert, wobei ein Anfangszählerwert von jedem der Zähler gleich null ist, wobei die Ausführung von jeder der Primärschlüsselabfragen ferner das Hochzählen des Zählerwerts der entsprechenden Indexzeile, die den in den jeweiligen Primärschlüsselabfragen (301c) spezifizierten Primärschlüssel umfasst, um eins umfasst; und
• nachdem eine Gesamtsumme der Zählerwerte einen Schwellenwert (301d) überschreitet, folgendes durchführt:
▪ Identifizieren eines Indexzeilensatzes aus Indexzeilen, wobei für jede der Indexzeilen des Indexzeilensatzes der entsprechende Zählerwert höher ist als irgendeiner der Zählerwerte der Zähler der Indexzeilen, die nicht zu dem Indexzeilensatz gehören, und ein Datenvolumen des Indexzeilensatzes unterhalb eines Schwellendatenvolumens (301e) liegt;
▪ Verschieben von jeder der Indexzeilen des Indexzeilensatzes aus der zweiten Speichervorrichtung in die erste Speichervorrichtung, wenn die jeweiligen Indexzeilen des Indexzeilensatzes in der zweiten Speichervorrichtung (301f) gespeichert sind;
▪ Verschieben von jeder der Indexzeilen, die nicht zum Indexzeilensatz gehören, aus der ersten Speichervorrichtung in die zweite Speichervorrichtung, wenn die jeweiligen Indexzeilen, die nicht zum Indexzeilensatz gehören, in der ersten Speichervorrichtung (301g) gespeichert sind; und
▪ Setzen aller Zählerwerte auf null (301h), nachdem der Indexzeilensatz identifiziert worden ist;
wobei die Datentabellen Spaltenspeichertabellen sind, wobei jede Spalte von jeder der Datentabellen, die nur in einer von den Partitionen gespeichert ist, als komprimierte zusammenhängende Datenaufzeichnung nur in der einen Partition gespeichert wird, wobei jede Spalte von jedem der Tabellenteile, das in der entsprechenden Partition gespeichert ist, als komprimierte zusammenhängende Datenaufzeichnung (111a, 112a, 113a, 114a, 115a) in der entsprechenden Partition gespeichert wird, wobei das Verschieben der jeweiligen Datenzeile umfasst:
• Dekomprimieren von jeder der komprimierten zusammenhängenden Datenaufzeichnungen, die den Spalten der Quelltabelle (306a) entsprechen;
• Dekomprimieren von jeder der komprimierten zusammenhängenden Datenaufzeichnungen, die den Spalten der Zieltabelle (306b) entsprechen;
• Verschieben von jeder der Dateneinheiten der jeweiligen Datenzeilen aus der entsprechenden dekomprimierten Datenaufzeichnung der Quelltabelle in die entsprechende dekomprimierte Datenaufzeichnung der Zieltabelle, wobei die entsprechende dekomprimierte Datenaufzeichnung der Quelltabelle und die entsprechende dekomprimierte Datenaufzeichnung der Zieltabelle einer der Spalten der einen von den Datentabellen entsprechen und die eine von den Spalten die jeweiligen Dateneinheiten umfasst, wobei jede von den Spalten der einen von den Datentabellen die entsprechende Dateneinheit der jeweiligen Datenzeile umfasst, wobei die jeweilige Dateneinheit der Primärschlüssel oder ein Sekundärschlüssel oder der Datenwert (306c) ist;
• Komprimieren von jedem der dekomprimierten zusammenhängenden Datenaufzeichnungen, die den Spalten der Quelltabelle (306d) entsprechen, nach dem Verschieben der jeweiligen Dateneinheiten; und
• Komprimieren von jeder der dekomprimierten zusammenhängenden Datenaufzeichnungen, die den Spalten der Zieltabelle (306e) entsprechen, nach dem Verschieben der jeweiligen Dateneinheiten.

2. System nach Anspruch 1, wobei eine Zugriffszeit für die erste Speichervorrichtung kürzer ist als eine Zugriffszeit für die zweite Speichervorrichtung.

3. System nach einem der vorangehenden Ansprüche, wobei von manchen oder allen von den Datenzeilen jede einen oder mehrere Sekundärschlüssel (101, 102, 111-113) umfasst, wobei jeder von den Sekundärschlüsseln einen entsprechenden Datenzeilensatz aus den Datenzeilen identifiziert, wobei jede von den Indexzeilen des entsprechenden Primärschlüssels ferner alle Sekundärschlüssel der Datenzeile umfasst, die den entsprechenden Primärschlüssel umfasst, wenn die Datenzeile, die den entsprechenden Primärschlüssel umfasst, mindestens einen von den Sekundärschlüsseln umfasst, wobei die Ausführung des prozessorausführbaren Codes durch den Computerprogramm ferner bewirkt, dass die Rechenvorrichtung:
• eine Sekundärschlüsselabfrage an der Datenbank durchführt, wobei einer von den Sekundärschlüsseln in der Sekundärschlüsselabfrage spezifiziert wird, wobei die Ausführung der Sekundärschlüsselabfrage umfasst:
▪ Identifizieren sämtlicher Partitionskennungen, die in den Indexzeilen gespeichert sind, die den spezifizierten Sekundärschlüssel (308) umfassen; und
▪ Ausführen einer Sekundärschlüsselabfrage an sämtlichen Partitionen, deren Partitionskennung unter Verwendung des spezifizierten Sekundärschlüssels (309) identifiziert wird.

4. Computerimplementiertes Verfahren zum Ermöglichen eines Zugriffs auf eine Datenbank in einem System (195), wobei die Datenbank (191), die Einträge enthält, auf Partitionen (130-133) verteilt gespeichert ist, das System eine erste Speichervorrichtung (140), eine zweite Speichervorrichtung (141) und eine Rechenvorrichtung umfasst, die erste Speichervorrichtung eine Partition (130) von den Partitionen enthält, die zweite Speichervorrichtung die anderen Partitionen (131-132) außer der einen von der ersten Speichervorrichtung enthält, jede von den Partitionen eine entsprechende Partitionskennung zur Identifizierung dieser Partition aufweist, wobei jeder von den Einträgen in einer oder mehreren Datenzeilen (160, 163, 164; 161, 165; 162, 166; 167, 168; 169, 170) von in der Datenbank gespeicherten Datentabellen (100, 110) gespeichert ist, wobei jede von den Datenzeilen einen entsprechenden Primärschlüssel (101, 112) für die Identifizierung dieser Datenzeile umfasst, wobei die Rechenvorrichtung einen Speicher (193), in dem prozessorausführbarer Programmcode gespeichert ist, und einen Computerprozessor (192) umfasst zum Ausführen des prozessorausführbaren Programmcodes, um zu bewirken, dass die Rechenvorrichtung das computerimplmentierte Verfahren durchführt, wobei jeder von den Einträgen mindestens einen Datenwert (104, 115) umfasst, der einen Hinweis auf eine Zuordnung der einzelnen Einträge zu einer der Partitionen gibt, wobei das computerimplmentierte Verfahren umfasst:
• Generieren einer entsprechenden Indexzeile (180-190), die den entsprechenden Primärschlüssel und die Partitionskennung umfasst, die mit dem entsprechenden Primärschlüssel assoziiert ist, für jeden der Primärschlüssel (101, 112); und
• Ausführen einer Primärschlüsselabfrage an der Datenbank, wobei einer von den Primärschlüsseln in der Primärschlüsselabfrage spezifiziert wird, wobei die Ausführung der Primärschlüsselabfrage umfasst:
▪ Identifizieren der Partitionskennung, die mit dem spezifizierten Primärschlüssel assoziiert ist, unter Verwendung der Indexzeilen (303);
▪ Ausführen der Primärschlüsselabfrage an der Partition mit der identifizierten Partitionskennung unter Verwendung des spezifizierten Primärschlüssels (304);
• Speichern von zumindest einem Teil der Indexzeilen in der ersten Speichervorrichtung und Speichern aller Indexzeilen, die nicht in der ersten Speichervorrichtung gespeichert werden, in der zweiten Speichervorrichtung, wobei die in der ersten Speichervorrichtung gespeicherten Indexzeilen ein Indexzuordnungskriterium (301) erfüllen, wobei die Identifizierung der Partitionskennung, die mit dem spezifizierten Primärschlüssel assoziiert ist, unter Verwendung der Indexzeilen durchgeführt wird, die in der ersten Speichervorrichtung gespeichert sind, wenn die in der ersten Speichervorrichtung gespeicherten Indexzeilen den spezifizierten Primärschlüssel umfassen, und andernfalls die Identifizierung der Partitionskennung, die mit dem spezifizierten Primärschlüssel assoziiert ist, unter Verwendung der Indexzeilen durchgeführt wird, die in der zweiten Speichervorrichtung gespeichert sind;
• Modifizieren eines oder mehrerer als Hinweis dienender Datenwerte des Eintrags (305); und
• Verschieben des Eintrags in eine Zielpartition, wenn mindestens ein Datenwert, der eine Zuordnung des zu verschiebenden Eintrags angibt, modifiziert wird und der mindestens eine modifizierte Datenwert angibt, dass der Eintrag von einer Quellpartition, in der er aktuell gespeichert ist, in die Zielpartition verschoben werden soll, wobei alle Indexzeilen, welche die entsprechenden Primärschlüssel der Datenzeilen des zu verschiebenden Eintrags umfassen, nach der Verschiebung des zu verschiebenden Eintrags aktualisiert werden, wobei in jeder von den aktualisierten Indexzeilen die Partitionskennung der Quellpartition durch die Partitionskennung der Zielpartition ersetzt wird, wobei die Quellpartition (130) eine der Partitionen (130-133) ist und die Zielpartition (131) eine andere von den Partitionen (130-133) ist, wobei von manchen oder allen von den Datentabellen jede auf mindestens zwei Partitionen verteilt gespeichert wird, wobei jede von den Tabellen, die auf Partitionen verteilt gespeichert werden, in Tabellenteile aufgeteilt wird, welche die Datenzeilen umfassen, die in den jeweiligen Partitionen gespeichert werden, auf die verteilt die einzelnen Tabellen gespeichert werden, wobei das Verschieben des Eintrags aus seiner Quellpartition in seine Zielpartition das Verschieben jeder Datenzeile des zu verschiebenden Eintrags aus der entsprechenden in der Quellpartition gespeicherten Quelldatentabelle, welche die jeweilige Datenzeile umfasst, in die entsprechende in der Zielpartition gespeicherte Ziedatentabelle umfasst, wobei die entsprechende Quelltabelle, welche die jeweilige Datenzeile umfasst, und die entsprechende Zieltabelle, die für die Einfügung der jeweiligen Datenzeile verwendet wird, Tabellenteile von einer der Datentabellen sind, die verteilt auf zumindest die Quell- und die Zielpartition gespeichert ist und die jeweilige Datenzeile umfasst,
wobei die Indexzeilen in Indextabellen gespeichert werden, die Indextabellen Zeilenspeichertabellen sind, jede von den Datenzeilen und ihre entsprechende Indexzeile den identischen Primärschlüssel umfassen, jede Zeile von jeder der Indextabellen als zusammenhängende Datenaufzeichnung (185a, 186a, 187a, 189a, 190a) gespeichert wird, jede von den Indextabellen die entsprechende Datentabelle aufweist, die einen identischen Satz von den Primärschlüsseln umfasst wie die jeweilige Indextabelle, wobei das Indexzuordnungskriterium ausgewählt ist aus einer Gruppe, die aus den folgenden Indexzuordnungskriterien a)-c) besteht:
a) alle Indexzeilen werden in der ersten Speichervorrichtung gespeichert;
b) die Indexzeilen, die den Datenzeilen entsprechen, die in der ersten Speichervorrichtung gespeichert sind, werden in der ersten Speichervorrichtung gespeichert und die Indexzeilen, die den Datenzeilen entsprechen, die in der zweiten Speichervorrichtung gespeichert sind, werden in der zweiten Speichervorrichtung gespeichert, wobei jede von den Indextabellen, von denen ein Teil der Indexzeilen in der ersten Speichervorrichtung gespeichert wird und ein anderer Teil der Indexzeilen in der zweiten Speichervorrichtung gespeichert wird, verteilt auf die erste und die zweite Speichervorrichtung gespeichert wird, wobei das Verschieben der jeweiligen Datenzeile ferner das Verschieben der zusammenhängenden Datenaufzeichnung der entsprechenden Indexzeile, die den gleichen Primärindex umfasst wie die jeweilige Datenzeile, aus der ersten Speichervorrichtung in die zweite Speichervorrichtung umfasst, wenn die jeweilige Datenzeile aus der ersten Speichervorrichtung in die zweite Speichervorrichtung verschoben wird, wobei das Verschieben der jeweiligen Datenzeile ferner das Verschieben der zusammenhängenden Datenaufzeichnung der entsprechenden Indexzeile, die den gleichen Primärindex umfasst wie die jeweilige Datenzeile, aus der zweiten Speichervorrichtung in die erste Speichervorrichtung umfasst, wenn die jeweilige Datenzeile aus der zweiten Speichervorrichtung in die erste Speichervorrichtung verschoben wird, wobei die Indextabelle, welche die entsprechende Indexzeile umfasst, verteilt auf die erste Speichervorrichtung und die zweite Speichervorrichtung gespeichert wird, wenn die jeweilige Datenzeile aus der zweiten Speichervorrichtung in die erste Speichervorrichtung verschoben wird;
c) die Indexzeilen, die den Datenzeilen entsprechen, die in der ersten Speichervorrichtung gespeichert sind, werden in der ersten Speichervorrichtung gespeichert und die Indexzeilen, die den Datenzeilen entsprechen, die in der zweiten Speichervorrichtung gespeichert sind, werden in der zweiten Speichervorrichtung gespeichert, bevor irgendeine der Primärschlüsselabfragen (301a) ausgeführt wird, wobei jede von den Indextabellen, von denen ein Teil der Indexzeilen in der ersten Speichervorrichtung gespeichert wird und ein anderer Teil der Indexzeilen in der zweiten Speichervorrichtung gespeichert wird, verteilt auf die erste Speichervorrichtung und die zweite Speichervorrichtung gespeichert wird, wobei das computerimplmentierte Verfahren ferner umfasst:
• Generieren eines Zählers für jede von den Indexzeilen (301b), wobei ein Anfangszählerwert von jedem der Zähler gleich null ist, wobei die Ausführung von jeder der Primärschlüsselabfragen ferner das Hochzählen des Zählerwerts der entsprechenden Indexzeile, die den in den jeweiligen Primärschlüsselabfragen (301c) spezifizierten Primärschlüssel umfasst, um eins umfasst; und
• Durchführen von Folgendem, nachdem eine Gesamtsumme der Zählerwerte einen Schwellenwert (301d) überschritten hat:
▪ Identifizieren eines Indexzeilensatzes aus Indexzeilen, wobei für jede von den Indexzeilen des Indexzeilensatzes der entsprechende Zählerwert höher ist als irgendeiner der Zählerwerte der Zähler der Indexzeilen, die nicht zu dem Indexzeilensatz gehören, und ein Datenvolumen des Indexzeilensatzes unterhalb eines Schwellendatenvolumens (301e) liegt;
▪ Verschieben von jeder der Indexzeilen des Indexzeilensatzes aus der zweiten Speichervorrichtung in die erste Speichervorrichtung, wenn die jeweiligen Indexzeilen des Indexzeilensatzes in der zweiten Speichervorrichtung (301f) gespeichert sind;
▪ Verschieben von jeder der Indexzeilen, die nicht zum Indexzeilensatz gehören, aus der ersten Speichervorrichtung in die zweite Speichervorrichtung, wenn die jeweiligen Indexzeilen, die nicht zum Indexzeilensatz gehören, in der ersten Speichervorrichtung (301g) gespeichert sind; und
▪ Setzen aller Zählerwerte auf null (301h), nachdem der Indexzeilensatz identifiziert worden ist;
wobei die Datentabellen Spaltenspeichertabellen sind, wobei jede Spalte von jeder der Datentabellen, die nur in einer von den Partitionen gespeichert ist, als komprimierte zusammenhängende Datenaufzeichnung nur in der einen Partition gespeichert wird, wobei jede Spalte von jedem der Tabellenteile, die in der entsprechenden Partition gespeichert sind, als komprimierte zusammenhängende Datenaufzeichnung (111a, 112a, 113a, 114a, 115a) in der entsprechenden Partition gespeichert wird, wobei das Verschieben der jeweiligen Datenzeile umfasst:
• Dekomprimieren von jeder der komprimierten zusammenhängenden Datenaufzeichnungen, die den Spalten der Quelltabelle (306a) entsprechen;
• Dekomprimieren von jeder der komprimierten zusammenhängenden Datenaufzeichnungen, die den Spalten der Zieltabelle (306b) entsprechen;
• Verschieben von jeder der Dateneinheiten der jeweiligen Datenzeilen aus der entsprechenden dekomprimierten Datenaufzeichnung der Quelltabelle in die entsprechende dekomprimierte Datenaufzeichnung der Zieltabelle, wobei die entsprechende dekomprimierte Datenaufzeichnung der Quelltabelle und die entsprechende dekomprimierte Datenaufzeichnung der Zieltabelle einer der Spalten der einen von den Datentabellen entsprechen und die eine von den Spalten die jeweiligen Dateneinheiten umfasst, wobei jede von den Spalten der einen von den Datentabellen die entsprechende Dateneinheit der jeweiligen Datenzeile umfasst, wobei die jeweilige Dateneinheit der Primärschlüssel oder ein Sekundärschlüssel oder der Datenwert (306c) ist;
• Komprimieren von jedem der dekomprimierten zusammenhängenden Datenaufzeichnungen, die den Spalten der Quelltabelle (306d) entsprechen, nach dem Verschieben der jeweiligen Dateneinheit; und
• Komprimieren von jedem der dekomprimierten zusammenhängenden Datenaufzeichnungen, die den Spalten der Zieltabelle (306e) entsprechen, nach dem Verschieben der jeweiligen Dateneinheit.

5. Computerimplementiertes Verfahren nach Anspruch 4, wobei eine Zugriffszeit für die erste Speichervorrichtung kürzer ist als eine Zugriffszeit für die zweite Speichervorrichtung.

6. Computerimplementiertes Verfahren nach einem der vorangehenden Ansprüche 4 oder 5, wobei von manchen oder allen von den Datenzeilen jede einen oder mehrere Sekundärschlüssel (101, 102, 111-113) umfasst, wobei jeder von den Sekundärschlüsseln einen entsprechenden Datenzeilensatz von den Datenzeilen identifiziert, wobei jede von den Indexzeilen des entsprechenden Primärschlüssels ferner alle Sekundärschlüssel der Datenzeile umfasst, die den entsprechenden Primärschlüssel umfasst, wenn die Datenzeile, die den entsprechenden Primärschlüssel umfasst, mindestens einen der Sekundärschlüssel umfasst, wobei das computerimplementierte Verfahren ferner umfasst:
• Ausführen einer Sekundärschlüsselabfrage an der Datenbank, wobei einer von den Sekundärschlüsseln in der Sekundärschlüsselabfrage spezifiziert wird, wobei die Ausführung der Sekundärschlüsselabfrage umfasst:
▪ Identifizieren sämtlicher Partitionskennungen, die in den Indexzeilen gespeichert sind, die den spezifizierten Sekundärschlüssel (308) umfassen; und
▪ Ausführen einer Sekundärschlüsselabfrage an sämtlichen Partitionen, deren Partitionskennung unter Verwendung des spezifizierten Sekundärschlüssels (309) identifiziert wird.

7. Computerlesbares Medium, in dem ein computerausführbarer Programmcode gespeichert ist, der durch einen Computerprozessor auszuführen ist, welcher eine Rechenvorrichtung eines Systems steuert, wobei das System eine erste Speichervorrichtung, eine zweite Speichervorrichtung und die Rechenvorrichtung umfasst, wobei die Ausführung der Befehle des ausführbaren Programmcodes bewirkt, dass die Rechenvorrichtung das computerimplementierte Verfahren nach den Ansprüchen 4-6 auf dem System durchführt.

## Revendications

1. Système (195) comprenant :
un premier dispositif de stockage (140 ;
un second dispositif de stockage (141), dans lequel une base de données (191) contenant des entrées est stockée entre différentes partitions (130 à 133), le premier dispositif de stockage comprend une partition (130) des partitions, le second dispositif de stockage comprend les autres partitions (131 à 133) à l'exception de celle du premier dispositif de stockage, chacune des partitions ayant une identification de partition correspondante pour une identification de cette partition, où chacune des entrées est stockée dans une ou plusieurs rangées de données (160, 163, 164 ; 161, 165 ; 162, 166 ; 167, 168 ; 169, 170) de tables de données (100, 110) stockées dans la base de données, où chacune des rangées de données comprend une clé primaire correspondante (101, 112) pour l'identification de cette rangée de données, où chacune des entrées comprend au moins une valeur de données (104, 115) indicatrice de l'allocation de chacune des entrées dans l'une des partitions ; et un dispositif informatique comprenant :
une mémoire (193) stockant un code de programme exécutable par processeur, et
un processeur d'ordinateur (192) pour exécuter le code de programme exécutable par processeur afin d'amener le dispositif informatique à :
• générer, pour chacune des clés primaires (101, 112), une rangée d'index correspondante (180 à 190) comprenant la clé primaire correspondante et l'identification de la partition associée à ladite clé primaire correspondante (300) ; et
• exécuter une requête par la clé primaire sur la base de données, où une des clés primaires est indiquée dans la requête par la clé primaire, où l'exécution de la requête par la clé primaire comprend :
▪ l'identification de l'identification de la partition associée à la clé primaire indiquée en utilisant les rangées d'index (303) ;
▪ l'exécution d'une requête par la clé primaire sur la partition ayant l'identification de la partition identifiée en utilisant la clé primaire indiquée (304) ;
• stocker au moins une partie des rangées d'index sur le premier dispositif de stockage, et le stockage de toutes les rangées d'index, qui ne sont pas stockées sur le premier dispositif de stockage, sur le second dispositif de stockage, où les rangées d'index stockées sur le premier dispositif de stockage se conforment à un critère d'allocation d'index (301), où l'identification de l'identification de la partition associée à la clé primaire indiquée est réalisée en utilisant les rangées d'index stockées sur le premier dispositif de stockage si les rangées d'index stockées sur le premier dispositif de stockage comprennent la clé primaire indiquée, dans le cas contraire, l'identification de l'identification de la partition associée à la clé primaire indiquée est réalisée en utilisant les rangées d'index stockées sur le second dispositif de stockage ;
• modifier une ou plusieurs valeurs de données indicatrices de l'entrée (305) ; et
• déplacer l'entrée vers une partition cible si au moins une valeur de données indicatrice de l'allocation de l'entrée à déplacer est modifiée et l'au moins une valeur de données modifiée indique que l'entrée doit être déplacée vers la partition cible à partir d'une partition source dans laquelle elle est actuellement stockée, où toutes les rangées d'index comprenant les clés primaires correspondantes des rangées de données de l'entrée à déplacer sont actualisées après que l'entrée à déplacer ait été déplacée, où, dans chacune des rangées d'index actualisées, l'identification de la partition de la partition source est remplacée par l'identification de la partition de la partition cible, où la partition source (130) est l'une des partitions (130 à 133) et la partition cible (131) est une autre des partitions (130 à 133), où chacune parmi quelques ou de toutes les tables de données sont stockées entre les différentes partitions, où chacune des tables étant stockées entre les partitions est divisée en parties de la table comprenant les rangées d'index stockées dans chacune des partitions entre lesquelles la chacune des tables est stockée, où le déplacement de l'entrée depuis sa partition source vers sa partition cible comprend le déplacement de chaque rangée de données de l'entrée à déplacer depuis la table de données source correspondante étant stockée dans ladite partition source et comprenant la chaque rangée de données vers la table de données cible correspondante étant stockée dans ladite partition cible, où la table source correspondante comprenant la chaque rangée de données et la table cible correspondante utilisée pour insérer la chaque rangée de données sont des parties de la table de l'une des tables de données étant stockées entre au moins ladite partition source et ladite partition cible et comprenant la chaque rangée de données,
où le système est **caractérisé en ce que**, que les rangées d'index sont stockées dans des tables d'index, où les tables d'index sont les tables de stockage des rangées, où chacune des rangées de données et sa rangée d'index correspondante comprennent la clé primaire identique, chaque rangée de chacune des tables d'index est stockée en tant qu'enregistrement de données contigües (185a, 186a, 187a, 189a, 190a), chacune des tables d'index a la table de données correspondante comprenant un ensemble identique des clés primaires comme la chacune des tables d'index, où le critère d'allocation d'index est choisi à partir d'un groupe constitué par les critères d'allocation d'index a) à c) suivantes :
a) toutes les rangées d'index sont stockées dans le premier dispositif de stockage ;
b) les rangées d'index correspondant aux rangées de données stockées sur le premier dispositif de stockage sont stockées sur le premier dispositif de stockage et les rangées d'index correspondant aux rangées de données stockées sur le second dispositif de stockage sont stockées sur le second dispositif de stockage, où chacune des tables d'index ayant une partie des rangées d'index stockées sur le premier dispositif de stockage et une autre partie des rangées d'index stockées sur le second dispositif de stockage est stockée entre le premier et le second dispositif de stockage, où le déplacement de la chaque rangée de données comprend en outre le déplacement de l'enregistrement des données contigües de la rangée d'index correspondante comprenant le même index primaire que la chaque rangée de données depuis le premier dispositif de stockage vers le second dispositif de stockage si la chaque rangée de données est déplacée depuis le premier dispositif de stockage vers le second dispositif de stockage, où le déplacement de la chaque rangée de données comprend en outre le déplacement de l'enregistrement des données contigües de la rangée d'index correspondante comprenant le même index primaire que la chaque rangée de données depuis le second dispositif de stockage vers le premier dispositif de stockage si la chaque rangée de données est déplacée depuis le second dispositif de stockage vers le premier dispositif de stockage, où la table d'index comprenant la rangée d'index correspondante est stockée entre le premier dispositif de stockage et le second dispositif de stockage si la chaque rangée de données est déplacée depuis le second dispositif de stockage vers le premier dispositif de stockage ;
c) les rangées d'index *correspondant* aux rangées de données stockées sur le premier dispositif de stockage sont stockées sur le premier dispositif de stockage et les rangées d'index correspondant aux rangées de données stockées sur le second dispositif de stockage sont stockées sur le second dispositif de stockage avant l'exécution de l'une quelconque des requêtes par la clé primaire (301a), où chacune des tables d'index ayant une partie des rangées d'index stockée sur le premier dispositif de stockage et une autre partie des rangées d'index stockée sur le second dispositif de stockage est stockée entre le premier dispositif de stockage et le second dispositif de stockage, où l'exécution du code exécutable par processeur par le processeur de l'ordinateur amène en outre le dispositif informatique à :
• générer un compteur pour chacune des rangées d'index (301b), où une valeur initiale du compteur de chacun des compteurs est égale à zéro, où l'exécution de chacune des requêtes par la clé primaire comprend en outre l'augmentation d'une unité de la valeur du compteur de la rangée d'index correspondante comprenant la clé primaire indiquée dans la chacune des requêtes par la clé primaire (301c) ; et
• après qu'une somme totale des valeurs du compteur dépasse une valeur de seuil (301d), réaliser les actions suivantes :
▪ l'identification d'un ensemble de rangées d'index des rangées d'index, où chacune des rangées d'index de l'ensemble des rangées d'index a la valeur de compteur correspondante supérieure à l'une quelconque des valeurs du compteur des compteurs des rangées d'index, qui n'appartiennent pas à l'ensemble des rangées d'index, et un volume de données de l'ensemble des rangées d'index est inférieur à un volume de données de seuil (301^{e}) ;
▪ le déplacement de chacune des rangées d'index de l'ensemble des rangées d'index depuis le second dispositif de stockage vers le premier dispositif de stockage si la chacune des rangées d'index de l'ensemble de rangées d'index est stockée sur le second dispositif de stockage (301f) ;
▪ le déplacement de chacune des rangées d'index, qui n'appartient pas à l'ensemble des rangées d'index, depuis le premier dispositif de stockage vers le second dispositif de stockage si la chacune des rangées d'index, qui n'appartient pas à l'ensemble des rangées d'index, est stockée sur le premier dispositif de stockage (301g) ; et
▪ après l'identification de l'ensemble des rangées d'indes, la mise à zéro de toutes les valeurs de compteur (301h) ;
où les tables de données sont des tables de données pour un stockage en colonnes, où chaque colonne de chacune des tables de données stockées uniquement dans une seule des partitions est stockée en tant qu'enregistrement de données contigües compressées dans l'uniquement une seule des partitions, où chaque colonne de chacune des parties de table stockées dans la partition correspondante est stockée en tant qu'enregistrement des données contigües compressées (111a, 112a, 113a, 114a, 115a) dans la partition correspondante, où le déplacement de chaque rangée de données comprend :
• la décompression de chacun des enregistrements de données contigües compressées correspondant aux colonnes de la table source (306a) ;
• la décompression de chacun des enregistrements des données contigües compressées correspondant aux colonnes de la table cible (306b) ;
• le déplacement de chacune des entités de données de chaque rangée de données depuis l'enregistrement des données compressées correspondantes de la table source vers l'enregistrement des données décompressées correspondantes de la table cible, où l'enregistrement des données compressées correspondantes de la table source et l'enregistrement des données décompressées correspondantes de la table cible correspondent à une seule des colonnes de la une seule des tables de données et la une seule des colonnes comprend la chacune des entités de données, où chacune des colonnes de la une seule des tables de données comprend l'entité de données correspondante de la chaque rangée de données, où la chaque entité de données est la clé primaire, ou une clé secondaire, ou la valeur des données (306c) ;
• après le déplacement de la chacune des entités de données, la compression de chacun des enregistrements des données contigües décompressées correspondant aux colonnes de la table source (306d) ; et
• après le déplacement de la chacune des entités de données, la compression de chacun des enregistrements des données contigües décompressées correspondant aux colonnes de la table cible (306e).

2. Système selon la revendication 1, dans lequel un temps d'accès du premier dispositif de stockage est plus court qu'un temps d'accès du second dispositif de stockage.

3. Système selon l'une quelconque des revendications précédentes, dans lequel chacune parmi quelques ou toutes les rangées de données comprend une seule ou plusieurs clés secondaires (101, 102, 111 à 113), chacune des clés secondaires identifie un ensemble de rangées de données correspondantes parmi les rangées de données, où chacune des rangées d'index de la clé primaire correspondante comprend en outre toute les clés secondaires de la rangée de données comprenant la clé primaire correspondante si la rangée de données qui comprend la clé primaire correspondante comprend au moins une seule des clés secondaires, où l'exécution du code exécutable par processeur par le processeur de l'ordinateur amène en outre le dispositif informatique à :
• exécuter une requête par la clé secondaire sur la base de données, où une seule des clés secondaires est indiquée dans la requête par la clé secondaire, où l'exécution de la requête par la clé secondaire comprend :
▪ l'identification de toutes les identifications de partition stockées dans les rangées d'index comprenant la clé secondaire indiquée (308) ; et
▪ l'exécution d'une requête par la clé secondaire sur toutes les partitions ayant leur identification de partition identifiée en utilisant la clé secondaire indiquée (309).

4. Procédé mis en oeuvre par ordinateur pour délivrer un accès à une base de données sur un système (195), où la base de données (191), comprenant des entrées, est stockée entre des partitions (130 à 133), le système comprenant un premier dispositif de stockage (140), un second dispositif de stockage (141), et un dispositif informatique, le premier dispositif de stockage comprenant une seule partition (130) parmi les partitions, le second dispositif de stockage comprenant les autres partitions (131 à 132) à l'exception de celle du premier dispositif de stockage, chacune des partitions ayant une identification de partition correspondante pour l'identification de cette partition, où chacune des entrées est stockée dans une ou dans plusieurs rangées de données (160, 163, 164 ; 161, 165 ; 162, 166 ; 167, 168 ; 169, 170) des tables de données (100, 110) stockées dans la base de données, où chacune des rangées de données comprend une clé primaire correspondante (101, 112) pour l'identification de cette rangée de données, où le dispositif informatique comprend une mémoire (193) stockant le code du programme exécutable par processeur et un processeur d'ordinateur (192) pour exécuter le code du programme exécutable par processeur afin d'amener le dispositif informatique à exécuter le procédé mis en oeuvre par ordinateur, où chacune des entrées comprend au moins une valeur de données (104, 115) indicatrice de l'allocation de chacune des entrées dans une des partitions, le procédé mis en oeuvre par ordinateur comprenant .
• la génération, pour chacune des clés primaires (101, 112) d'une rangée d'index correspondante (180 à 190) comprenant la clé primaire correspondante et l'identification de la partition associée à ladite clé primaire correspondante ;
et
• l'exécution d'une requête par la clé primaire sur la base de données, où une des clés primaires est indiquée dans la requête par la clé primaire, où l'exécution de la requête par la clé primaire comprend :
▪ l'identification de l'identification de la partition associée à la clé primaire indiquée en utilisant les rangées d'index (303) :
▪ l'exécution de la requête par la clé primaire sur la partition ayant l'identification de la partition identifiée en utilisant la clé primaire indiquée (304) ;
• le stockage d'au moins une partie des rangées d'index sur le premier dispositif de stockage, et le stockage de toutes les rangées d'index, qui ne sont pas stockées sur le premier dispositif de stockage, sur le second dispositif de stockage, où les rangées d'index stockées sur le premier dispositif de stockage sont conformes à un critère d'allocation d'index (301), où l'identification de l'identification de la partition associée à la clé primaire indiquée est réalisée en utilisant les rangées d'index stockées sur le premier dispositif de stockage si les rangées d'index stockées sur le premier dispositif de stockage comprennent la clé primaire indiquée, dans le cas contraire, l'identification de l'identification de la partition associée à la clé primaire indiquée est réalisée en utilisant les rangées d'index stockées sur le second dispositif de stockage ;
• la modification d'une seule ou de plusieurs valeurs de données indicatrices de l'entrée (305) ; et
• le déplacement de l'entrée vers une partition cible si au moins une seule valeur de données indicatrice de l'allocation de l'entrée à déplacer est modifiée et l'au moins une seule valeur de données modifiée indique que l'entrée doit être déplacée vers la partition cible à partir d'une partition source dans laquelle elle est actuellement stockée, où toutes les rangées d'index comprenant les clés primaires correspondantes des rangées de données de l'entrée à déplacer sont actualisées après que l'entrée à déplacer ait été déplacée, où, dans chacune des rangées d'index actualisées, l'identification de la partition de la partition source est remplacée par l'identification de la partition de la partition cible, où la partition source (130) est une des partitions (130 à 133) et la partition cible (131) est une autre des partitions (130 à 133), chacune parmi quelques ou toutes les tables de données étant stockée entre au moins deux partitions, où chacune des tables étant stockée entre les partitions est divisée en parties de table comprenant les rangées de données stockées dans chacune des partitions entre lesquelles la chacune des tables est stockée, où le déplacement de l'entrée depuis sa partition source vers sa partition cible comprend le déplacement de chaque rangée de données de l'entrée à déplacer depuis la table de données source correspondante étant stockée dans ladite partition source et comprenant la chaque rangée de données vers la table de données cible correspondante étant stockée dans ladite partition cible, où la table source correspondante comprenant la chaque rangée de données et la table cible correspondante utilisée pour l'insertion de la chaque rangée de données sont des parties de table parmi l'une des tables de données qui est stockée entre au moins ladite partition source et ladite partition cible et qui comprend la chaque rangée de données,
où les rangées d'index sont stockées dans les tables d'index, les tables d'index sont les tables de stockage des rangées, chacune des rangées de données et sa rangée d'index correspondante comprennent la clé primaire identique, chaque rangée de chacune des tables d'index est stockée en tant qu'enregistrement de données contigües (185a, 186a, 187a, 189a, 190a), chacune des tables d'index a la table de données correspondante comprenant un ensemble identique de clés primaires comme la chacune des tables d'index, où le critère d'allocation d'index est choisi à partir d'un groupe formé par les critères d'allocation d'index a) à c) suivantes :
a) toutes les rangées d'index sont stockées dans le premier dispositif de stockage ;
b) les rangées d'index correspondant aux rangées de données stockées sur le premier dispositif de stockage sont stockées sur le premier dispositif de stockage et les rangées d'index correspondant aux rangées de données stockées sur le second dispositif de stockage sont stockées sur le second dispositif de stockage, où chacune des tables d'index ayant une partie des rangées d'index stockées sur le premier dispositif de stockage et une autre partie des rangées d'index stockées sur le second dispositif de stockage est stockée entre le premier et le second dispositif de stockage, où le déplacement de la chaque rangée de données comprend en outre le déplacement de l'enregistrement des données contigües de la rangée d'index correspondante comprenant le même index primaire que la chaque rangée de données depuis le premier dispositif de stockage vers le second dispositif de stockage si la chaque rangée de données est déplacée depuis le premier dispositif de stockage vers le second dispositif de stockage, où le déplacement de la chaque rangée de données comprend en outre le déplacement de l'enregistrement des données contigües de la rangée d'index correspondante comprenant le même index primaire que la chaque rangée de données depuis le second dispositif de stockage vers le premier dispositif de stockage si la chaque rangée de données est déplacée depuis le second dispositif de stockage vers le premier dispositif de stockage, où la table d'index comprenant la rangée d'index correspondante est stockée entre le premier dispositif de stockage et le second dispositif de stockage si la chaque rangée de données est déplacée depuis le second dispositif de stockage vers le premier dispositif de stockage ;
c) les rangées d'index correspondant aux rangées de données stockées sur le premier dispositif de stockage sont stockées sur le premier dispositif de stockage et les rangées d'index correspondant aux rangées de données stockées sur le second dispositif de stockage sont stockées sur le second dispositif de stockage avant l'exécution de l'une quelconque des requêtes par la clé primaire (301a), où chacune des tables d'index ayant une partie des rangées d'index stockée sur le premier dispositif de stockage et une autre partie des rangées d'index stockée sur le second dispositif de stockage est stockée entre le premier dispositif de stockage et le second dispositif de stockage, où le procédé mis en oeuvre par ordinateur comprend en outre :
• la génération d'un compteur pour chacune des rangées d'index (301b), où une valeur initiale du compteur de chacun des compteurs est égale à zéro, où l'exécution de chacune des requêtes par la clé primaire comprend en outre l'augmentation d'une unité de la valeur du compteur de la rangée d'index correspondante comprenant la clé primaire indiquée dans la chacune des requêtes par la clé primaire (301c) ; et
• après qu'une somme totale des valeurs du compteur dépasse une valeur de seuil (301d), la réalisation des actions suivante
▪ l'identification d'un ensemble de rangées d'index parmi les rangées d'index, où chacune des rangées d'index de l'ensemble des rangées d'index a la valeur du compteur correspondante supérieure à l'une quelconque des valeurs du compteur des compteurs des rangées d'index, qui n'appartiennent pas à l'ensemble des rangées d'index, et un volume de données de l'ensemble des rangées d'index est inférieur à un volume de données de seuil (301^{e}) ;
▪ le déplacement de chacune des rangées d'index de l'ensemble des rangées d'index depuis le second dispositif de stockage vers le premier dispositif de stockage si la chacune des rangées d'index de l'ensemble des rangées d'index est stockée sur le second dispositif de stockage (301f) ;
▪ le déplacement de chacune des rangées d'index, qui n'appartient pas à l'ensemble des rangées d'index, depuis le premier dispositif de stockage vers le second dispositif de stockage si la chacune des rangées d'index, qui n'appartient pas à l'ensemble des rangées d'index, est stockée sur le premier dispositif de stockage (301g) ; et
▪ après l'identification de l'ensemble des rangées d'index, la mise à zéro de toutes les valeurs du compteur (301h) ;
où les tables de données sont des tables de données pour un stockage en colonnes, où chaque colonne de chacune des tables de données stockée uniquement dans une seule des partitions est stockée en tant qu'enregistrement de données contigües compressées dans la uniquement une seule des partitions, où chaque colonne de chacune des parties de table stockée dans la partition correspondante est stockée en tant qu'enregistrement des données contigües compressées (111a, 112a, 113a, 114a, 115a) dans la partition correspondante, où le déplacement de chaque rangée de données comprend :
• la décompression de chacun des enregistrements de données contigües compressées correspondant aux colonnes de la table source (306a) ;
• la décompression de chacun des enregistrements des données contigües compressées correspondant aux colonnes de la table cible (306b) ;
• le déplacement de chacune des entités de données de chaque rangée de données depuis l'enregistrement des données compressées correspondantes de la table source vers l'enregistrement des données décompressées correspondantes de la table cible, où l'enregistrement des données compressées correspondantes de la table source et l'enregistrement des données décompressées correspondantes de la table cible correspondent à une seule des colonnes de l'une seule parmi les tables de données et l'une seule parmi les colonnes comprend la chacune des entités de données, où chacune des colonnes de l'une seule des tables de données comprend l'entité de données correspondante de la chaque rangée de données, où la chaque entité de données est la clé primaire, ou une clé secondaire, ou la valeur des données (306c) ;
• après le déplacement de la chacune des entités de données, la compression de chacun des enregistrements des données contigües décompressées correspondant aux colonnes de la table source (306d) ; et
• après le déplacement de chacune des entités de données, la compression de chacun des enregistrements des données contigües décompressées correspondant aux colonnes de la table cible (306^{e}).

5. Procédé mis en oeuvre par ordinateur selon la revendication 4, dans lequel un temps d'accès du premier dispositif de stockage est plus court qu'un temps d'accès du second dispositif de stockage.

6. Procédé mis en oeuvre par ordinateur selon l'une des revendications 4 ou 5 précédentes, dans lequel chacune parmi quelques ou toutes les rangées de données comprend une seule ou plusieurs clés secondaires (101, 102, 111 à 113), chacune des clés secondaires identifie un ensemble de rangées de données correspondantes parmi les rangées de données, où chacune des rangées d'index de la clé primaire correspondante comprend en outre toute les clés secondaires de la rangée de données comprenant la clé primaire correspondante si la rangée de données qui comprend la clé primaire correspondante comprend au moins une seule parmi les clés secondaires, où le procédé mis en oeuvre par ordinateur comprend en outre :
• l'exécution d'une requête par la clé secondaire sur la base de données, où une seule des clés secondaires est indiquée dans la requête par la clé secondaire, où l'exécution de la requête par la clé secondaire comprend :
▪ l'identification de toutes les identifications de partition stockées dans les rangées d'index comprenant la clé secondaire indiquée (308) ; et
▪ l'exécution d'une requête par la clé secondaire sur toutes les partitions ayant leur identification de partition identifiée en utilisant la clé secondaire indiquée (309).

7. Support lisible par ordinateur sur lequel est stocké un code de programme exécutable par ordinateur pour l'exécution par un processeur d'ordinateur contrôlant un dispositif informatique d'un système, le système comprenant un premier dispositif de stockage, un second dispositif de stockage, et le dispositif informatique, où l'exécution des instructions du code de programme exécutable amène le dispositif informatique à exécuter le procédé mis en oeuvre par ordinateur selon les revendications 4 à 6 sur le système.
